(19) Europäisches Patentamt
European Patent Office
Office européen des brevets

(11) **EP 3 534 297 B1**

(12) # EUROPÄISCHE PATENTSCHRIFT

(45) Veröffentlichungstag und Bekanntmachung des Hinweises auf die Patenterteilung:
**26.04.2023 Patentblatt 2023/17**

(21) Anmeldenummer: **19154860.1**

(22) Anmeldetag: **31.01.2019**

(51) Internationale Patentklassifikation (IPC):
**G06K 9/00** *(2022.01)* **G06V 20/56** *(2022.01)*

(52) Gemeinsame Patentklassifikation (CPC):
**G06V 20/56**

(54) **VERFAHREN ZUR POSITIONSERMITTLUNG EINES BEWEGLICHEN OBJEKTS, VERFAHREN ZUR WEGPLANUNG FÜR EIN BEWEGLICHES OBJEKT, VORRICHTUNG HIERFÜR, DATENTRÄGER**

METHOD FOR DETERMINING THE POSITION OF A MOBILE OBJECT, METHOD FOR PATH PLANNING FOR A MOBILE OBJECT, DEVICE THEREFOR, DATA CARRIER

PROCÉDÉ DE DÉTERMINATION DE LA POSITION D'UN OBJET MOBILE, PROCÉDÉ DE PLANIFICATION DE TRAJET POU UN OBJET MOBILE, DISPOSITIF CORRESPONDANT, SUPPORT DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2018 DE 102018104779**

(43) Veröffentlichungstag der Anmeldung:
**04.09.2019 Patentblatt 2019/36**

(73) Patentinhaber: **SICK AG**
**79183 Waldkirch (DE)**

(72) Erfinder:
• **Hansen, Christoph**
**20535 Hamburg (DE)**
• **Röwekämper, Jörg**
**79211 Denzlingen (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
US-A1- 2008 027 591    US-A1- 2018 210 087

• **CHRISTOPHER CAIN ET AL: "FastSLAM Using Compressed Occupancy Grids", JOURNAL OF SENSORS, Bd. 2016, 8. Mai 2016 (2016-05-08), Seiten 1-23, XP055592430, US ISSN: 1687-725X, DOI: 10.1155/2016/3891865**

• **SEBASTIAN THRUN ET AL: "Robust Monte Carlo localization for mobile robots", ARTIFICIAL INTELLIGENCE., Bd. 128, Nr. 1-2, 30. Mai 2001 (2001-05-30), Seiten 99-141, XP055592754, NL ISSN: 0004-3702, DOI: 10.1016/S0004-3702(01)00069-8**

• **C Saranya ET AL: "Occupancy Grid Based Path Planning and Terrain Mapping Scheme for Autonomous Mobile Robots", , 31. Januar 2015 (2015-01-31), Seiten 1053-1061, XP055619230, Gefunden im Internet: URL:https://pdfs.semanticscholar.org/e454/ 1b636c7a48d6bcbf030b455da8b37c8acaa7.pdf [gefunden am 2019-09-06]**

• **MIJO CIKES ET AL: "The path planning algorithms for a mobile robot based on the occupancy grid map of the environment A comparative study", INFORMATION, COMMUNICATION AND AUTOMATION TECHNOLOGIES (ICAT), 2011 XXIII INTERNATIONAL SYMPOSIUM ON, IEEE, 27. Oktober 2011 (2011-10-27), Seiten 1-8, XP032073458, DOI: 10.1109/ICAT.2011.6102088 ISBN: 978-1-4577-0744-5**

• FOSTER PAUL ET AL: "VisAGGE: Visible angle grid for glass environments", 2013 IEEE INTERNATIONAL CONFERENCE ON ROBOTICS AND AUTOMATION (ICRA); 6-10 MAY 2013; KARLSRUHE, GERMANY, IEEE, US, 6 May 2013 (2013-05-06), pages 2213-2220, XP032506650, ISSN: 1050-4729, DOI: 10.1109/ICRA.2013.6630875 ISBN: 978-1-4673-5641-1 [retrieved on 2013-10-13]

**Beschreibung**

Die Erfindung betrifft ein Verfahren zur Positionsermittlung eines beweglichen Objekts, ein Verfahren zur Wegplanung für ein bewegliches Objekt, eine Vorrichtung hierfür und einen Datenträger gemäß den Oberbegriffen der unabhängigen Patentansprüche. Sie kann Anwendung finden im Gebiet der Steuerung/Regelung autonom beweglicher Objekte, etwa autonom fahrender Fahrzeuge und Fluggeräte/Drohnen, beweglicher Roboter und ähnliches. Sie betrifft den Aufbau von Repräsentation von Umgebungen, in denen sich bewegliche Objekte bewegen können, und die Nutzung solcher Repräsentationen.

In einem engen Sinn können solche Repräsentationen als Karten verstanden werden, die jedoch um bestimmte Merkmale und Informationen erweitert sind. Die Karten können zweidimensional angelegt sein, um etwa die Befahrbarkeit eines bestimmten Terrains abzubilden, oder dreidimensional, um den etwa für Robotik- oder Flugbewegungen zur Verfügung stehenden Raum zu charakterisieren. Die nachfolgende Beschreibung stellt beispielhaft zweidimensionale Repräsentationen/Kartierungen dar. Dies soll aber nicht die Anwendung der Erfindung auf dreidimensionale Repräsentationen ausschließen.

Bekannt ist es, Umgebungen elektronisch auswertbar zu repräsentieren. Solche Repräsentationen werden für mehrere Zwecke herangezogen, etwa zur Positionierung des beweglichen Objekts oder zur Wegführung und Wegfindung für das bewegliche Objekt. Darüber hinaus sind solche Repräsentationen selbst Gegenstand des Interesses insoweit, als sie aktualisiert und fortgeschrieben werden. Es gibt verschiedene Darstellungsarten solcher Repräsentationen.

Eine Darstellungsart sind sogenannte "Gridmaps". Sie entsprechen in etwa den "Bitmaps" von Grafiken. Gridmaps können eine gekachelte Fläche umfassen, auf der die Kachelgröße die kleinste Einheit ist und der möglichen Ortsauflösung entspricht. Zu jeder Kachel können Angaben gespeichert werden, die die Umgebung an der Stelle der Kachel repräsentieren. So können insbesondere Einträge zu Hindernissen hinterlegt sein. Hindernisse und allgemein kartierte Objekte werden nachfolgend auch als "Merkmale" bezeichnet.

Eine andere Darstellungsart ist eine Vektordarstellung entsprechend grafischen Vektorgrafiken.

Eine Technik alternativ zur Kartierung realer Umgebungsmerkmale in einer Umgebungsrepräsentation ist die Repräsentation von eigens angebrachten Reflektoren in Reflektorkarten statt der Repräsentation realer Objekte. Hier werden nicht reale Objekte der Szenerie kartiert, sondern eigens sinnvoll angebrachte Erfassungsziele (Reflektoren), die dann kartiert sind. Auch die Kartierung von Reflektorzielen kann in einer Gridmap erfolgen oder vektoriell.

Allgemein ist zu sagen, dass es in der dargestellten Technik nicht auf die Art der Kartierung, Repräsentation und Darstellung der Inhalte ankommt (reale Ziele, Reflektorziele, Gridmap, vektorielle Darstellung), sondern auf die davon verkörperter Inhalte. Im Folgenden wird die Beschreibung mindestens implizit so gegeben, als ob Gridmaps zu betrachten wären. Die beschriebenen Problematiken sind aber unabhängig von der Darstellungsweise als Gridmap und können ebenso als vektorielle Darstellung erfasst werden und beziehen sich in gleicher Weise auf das Repräsentieren realer Objekte wie Reflektoren.

Autonom fahrende Fahrzeuge umfassen üblicherweise Scanner, mit denen sie die Umgebung um sich erfassen können. In der Regel können sie im Vollkreis um sich herum die Umgebung mit einer bestimmten Auflösung abtasten. Sie erhalten so eine Vermessung der Umgebung, die aussagt, in welcher Richtung wie weit entfernt Hindernisse erfasst wurden. Die Winkelauflösung kann dabei <1 ° oder <2° oder <5° oder <10° sein. Bei einer Vermessung entstehen auf diese Weise Datenpaare, die jeweils zu einer relativen Winkellage bezogen auf die Fahrzeugausrichtung den Abstand eines Hindernisses angeben.

Häufig kann - nach einer Initialisierung des Fahrzeugs - angenommen werden, dass das Fahrzeug auch in etwa seine Position und seine Ausrichtung kennt. Es können dann relative Ausrichtungen umgerechnet werden auf absolute Ausrichtungen, die denjenigen in der Karte entsprechen. Weiter sind autonom navigierende Fahrzeuge häufig in der Lage, die eigene Position anhand der eigenen Odometrie (Weg- und Positionsschätzung aus der Antriebsauswertung) fortzurechnen. Statt Odometrie kann zur geschätzten Fortrechnung der eigenen Position aber auch vergleichende stereoskopische Bildauswertung oder ähnliches herangezogen werden. Der Nachteil der so fortgerechneten Position ist, dass sie nicht hinreichend genau ist und über die Zeit zunehmend ungenauer wird.

Zur Lösung dieses Problems ist es bekannt, die anhand der Odometrie, einer Bildauswertung oder dergleichen geschätzte Position anhand der Vermessungsdaten nach einem Umgebungsscan mit Daten einer elektronisch auswertbaren Karte bzw. Umgebungsrepräsentation abzugleichen, um so die geschätzte Position möglichst genau auf die reale Position zu bringen.

Unter idealen Bedingungen sind Laserscanner genaue Gerätschaften, die sowohl Richtung als auch Entfernung von Hindernissen/Zielen/Merkmalen genau erfassen können. Allerdings führen reale Umstände dazu, dass Umgebungsscans doch fehlerbehaftet sind. Nachfolgend werden einige Fehlerquellen aufgezählt:

- Die begrenzte Winkelauflösung kann dazu führen, dass kleine bzw. filigrane Ziele, etwa die Beine eines Regals, nicht erfasst werden, obwohl sie vorhanden sind.
- Die Oberfläche eines Hindernisses kann spiegelnd sein, so dass ein scannender Laser nicht zurückgestreut wird, sondern mit Ausfallswinkel gleich Einfallswinkel reflektiert wird, was allenfalls zufällig zurück zum Sensor führt. Dieser Effekt kann richtungsabhängig sein. Ähnliche Probleme treten bei transparenten Flächen auf (Glasflächen, Glastüren)

- Beleuchtungsbedingungen oder Mehrfachreflexionen können eine Auswirkung auf die Auswertung des Laserscans haben und zu Fehlerfassungen führen.
- Einmal erfasste und kartierte Objekte können später verschwunden sein, und umgekehrt. Wird beispielsweise ein überdachtes Freilager als Umgebung angenommen, innerhalb der zu navigieren ist, wird es sehr "stabile" Objekte geben, etwa die Wände oder Säulen des Lagers. Es wird aber auch wechselnde Objekte geben, beispielsweise einzelne auf der Freifläche abgestellte Gegenstände, die zeitweise dort sind und zeitweise nicht. Gleiches gilt für Personen und Fahrzeuge, die sich in der kartierten Umgebung befinden und bewegen.

Es gibt deshalb insgesamt in einer Umgebungsrepräsentation Objekte, die sich dort vergleichsweise stabil befinden, etwa die genannten Wände, aber auch andere Objekte, die ihre Präsenz ändern können (etwa variables Lagergut, Personen) oder Objekte, für die die Detektion schwierig ist.

Bekannt ist es, Umgebungen nicht nur mit einer Ja/Nein-Belegung einzelner Kacheln durch Hindernisse zu charakterisieren, sondern durch Belegungswahrscheinlichkeiten der Kachel, die Vorhandenseinswahrscheinlichkeiten eines erfassbaren Merkmals bzw. Hindernisses auf der Kachel entsprechen. In einem solchen Ansatz kann beispielsweise eine Wand eine sehr hohe Belegungswahrscheinlichkeit haben, die letztendlich auf 1 gesetzt werden kann, während andere Bereiche einer Umgebung andere Belegungswahrscheinlichkeiten haben können. Ein selten genutzter Bereich eines Freilagers kann beispielsweise eine Belegungswahrscheinlichkeit von 0,1 haben. Es wird hierbei davon ausgegangen, dass Wahrscheinlichkeiten wie üblich in der Stochastik mit Zahlenwerten zwischen 0 und 1 charakterisiert werden. Wenn logarithmisch gerechnet wird, entspricht dies dem Zahlenbereich zwischen $-\infty$ und 0.

Statt des schlichten Vorhandenseins oder nicht eines Hindernisses/Merkmals geben entsprechende Repräsentationen dann Belegungswahrscheinlichkeiten von Kacheln an, die ortsaufgelöst kachelweise ermittelt wurden und vorgehalten werden. Die Belegungswahrscheinlichkeit gibt also an, mit welcher Wahrscheinlichkeit ein Hindernis/Merkmal an einer vorbestimmten Position vorhanden ist. Bei der Nutzung der Umgebungsrepräsentation etwa zur Wegfindung oder zur Positionsbestimmung können die Belegungswahrscheinlichkeiten dann zur Gewichtung mehrerer Messungen untereinander herangezogen werden.

Nachteil der Verwendung von Belegungswahrscheinlichkeiten einzelner Flächenbereiche/Kacheln oder Volumenbereiche (im Dreidimensionalen) ist es, dass diese weder den zeitlichen Veränderungen solcher Gegebenheiten noch womöglich auftretenden Erfassungsschwierigkeiten Rechnung tragen. Wenn solche Umgebungsrepräsentationen dann zur Positionsbestimmung oder zur Wegfindung/Wegbestimmung eines beweglichen Objekts herangezogen werden, geschieht die Positionsbestimmung oder Wegbestimmung auf der Grundlage nicht bestmöglich geeigneter Daten.

Die US 7689321 B2 beschreibt ein VSLAM-Verfahren zum Einbinden von Sensormessungen, bei dem Messergebnisse mit Unsicherheitswerten bewertet und weiterverarbeitet werden.

Die US 2008/0027591 A1 beschreibt ein Verfahren zur Steuerung eines entfernten Fahrzeugs. Das Fahrzeug kann hochrangige Aufgabenbefehle empfangen und sich dann autonom verhalten. Sensormessungen während der Fahrzeugnavigation werden mit Wahrscheinlichkeiten belegt und verarbeitet.

Der Artikel "Simultaneous Localization and Mapping: ..." von Bresson und anderen in "IEEE Transactions on Intelligent Vehicles", Band 2 Nr. 3 September 2017, S. 194 ff, beschreibt SLAM-Ansätze im Gebiet des autonomen Fahrens.

Zum Stand der Technik gehören auch WO 2018/027210 A1, WO 2017/076929 A1, US 2008/0033645 A1, und der Artikel "A Quantitative Study of Mapping and Localization ..." aus der "Nirma University International Conference on Engineering", 2017, S. 1 - 5.

Der Artikel "FastSLAM Using Compressed Occupancy Grids" von Cain und Leonessa in "Journal of Sensors", 2016, Artikel-ID 3891865, spricht die Verwendung einer Belegwahrscheinlichkeit an.

Der Artikel "Occupancy Grid Based Path Planning ..." von Saranya und anderen in IJCTA 2015, S. 1053 - 1061, beschreibt den Aufbau und die Nutzung eines Belegungsrasters ("occupancy grid").

Der Artikel "VisAGGE: Visible Angle Grid for Glas Environments" von Foster und anderen in 2013 IEEE "International Conference on Robotics and Automation", 6.5.2013, S. 2213 ff, beschreibt einen Algorithmus für Belegungsrasterkarten, bei dem für belegte Zellen Sichtbarkeitsfunktionen definiert und verwendet werden.

Aufgabe der Erfindung ist es, ein verbessertes Positionsermittlungsverfahren und ein verbessertes Wegplanungsverfahren für ein bewegliches Objekt anzugeben. Auch Vorrichtungen hierfür sollen nach der Erfindung geschaffen werden.

Diese Aufgabe wird mit den Merkmalen der unabhängigen Ansprüche gelöst.

Zunächst wird eine Umgebungsrepräsentationsvorrichtung beschrieben, die genutzt werden kann.

Sie umfasst einen Datenträger und ein Schnittstellengerät, wobei der Datenträger Daten trägt, die eine Umgebung repräsentieren, mit einem oder mehreren erste Datenträgerteilen, die Kartendatenteile tragen, die ortsauflösend Merkmale einer Umgebung angeben oder die Herleitung solcher Merkmalsangaben erlauben, und mit einem oder mehreren zweiten Datenträgerteilen, die Zuverlässigkeitsdatenteile tragen, die ortsauflösend Zuverlässigkeitsdaten von Merkmalen einer Umgebung angeben oder die Herleitung solcher Zuverlässigkeitsdaten erlauben und die ortsauflösend angeben, als wie zuverlässig erfassbar die jeweils repräsentierten Merkmale eingeschätzt wurden, und die auch Belegungswahrscheinlichkeitsdatenteile tragen, die ortsauflösend Belegungswahrsacheinlichkeitsdaten von Merkmalen der Umgebung angeben oder die Herleitung solcher jeweiligen Belegungswahrscheinlichkeitsdaten erlaubt, wobei ein Belegungswahrscheinlichkeitswert angibt, als wie wahrscheinlich vorhanden ein von dem Belegungswahrscheinlichkeitswert repräsentiertes Merkmal eingeschätzt wurde, und wobei das Schnittstellengerät Kartendaten und Zuverlässigkeitsdaten ortsauflösend einander zugeordnet lesend und/oder schreibend zugänglich macht.

Die Umgebungsrepräsentationsvorrichtung macht sich die Erkenntnis zunutze, dass durch die Hinterlegung von ortsaufgelösten Zuverlässigkeitsdaten und Belegungswahrscheinlichkeitsdaten eine verbesserte Positionsermittlung und eine verbesserte Wegplanung ermöglicht werden, da beispielsweise stark fehlerbehaftete Kartenbereiche bekannt sein können. Ebenfalls können Kartenbereiche bekannt sein, die mit einer hohen Zuverlässigkeit korrekt sind, sodass z.B. bei der Positionsermittlung dann auf diese Kartenbereiche "vertraut" werden kann. Überdies ermöglichen die Zuverlässigkeitsdaten auch weitergehende Verbesserungen im Betrieb z.B. eines autonomen Fahrzeugs, wie später dargelegt.

Die Zuverlässigkeitsdaten geben an, mit welcher Zuverlässigkeit ein jeweiliges Merkmal an einem Ort der Karte tatsächlich erfasst werden kann. Hierzu können beispielsweise mehrere, insbesondere direkt nacheinander und/oder innerhalb einer vorbestimmten Zeitdauer erfolgte Vermessungen der Umgebung herangezogen werden. Liefern alle oder fast alle Vermessungen das gleiche Ergebnis, ist die Zuverlässigkeit sehr hoch (d.h. 1 oder nahe bei 1). Erkennen z.B. nur 50% der Vermessungen ein Hindernis/Merkmal, so kann die Zuverlässigkeit geringer sein, z.B. nur 0,5. Wird in noch weniger Vermessungen das gleiche Ergebnis erzielt, d.h. es wird z.B. nur in 10% der Messungen ein Hindernis/Merkmal erkannt, kann die Zuverlässigkeit beispielsweise nur 0,1 sein. Zur Ermittlung der Zuverlässigkeit kann insbesondere auch ein Pegel eines Messsignals herangezogen werden. Dieser Pegel kann, z.B. bei einem Laserscanner, für transparente Merkmale niedriger sein, was mit einer geringeren Zuverlässigkeit einhergeht.

Die Kartendatenteile stellen auch Vorhandenseinswahrscheinlichkeiten dar, die ortsauflösend Vorhandenseinswahrscheinlichkeiten von Merkmalen einer Umgebung angeben oder die Herleitung solcher Vorhandenseinswahrscheinlichkeiten erlauben und die ortsauflösenden angeben, als wie wahrscheinlich vorhanden ein repräsentiertes Merkmal eingeschätzt wurde. Der Unterschied zwischen der Vorhandenseinswahrscheinlichkeit und der Zuverlässigkeit liegt also insbesondere darin, dass die Vorhandenseinswahrscheinlichkeit sich auf die Wahrscheinlichkeit bezieht, mit welcher ein real vorhandenes Merkmal tatsächlich vorhanden ist, wohingegen die Zuverlässigkeit sich insbesondere auf die Zuverlässigkeit der Erfassung/Vermessung bezieht (d.h. der z.B. zur Vermessung verwendete Scanner wird bei der Zuverlässigkeit berücksichtigt).

Insbesondere trägt der Datenträger Historiedatenteile, die ortsauflösend Erfassungshistorien von Merkmalen einer Umgebung angeben oder die Herleitung solcher Erfassungshistorien erlauben, und wobei das Schnittstellengerät auch die Historiedaten den anderen Daten ortsauflösend zugeordnet zugänglich macht. Die Historiedatenteile spiegeln also die in der Vergangenheit an einem Ort erfassten Merkmale wieder.

Vorteilhafterweise trägt der Datenträger Markierungsdatenteile, die ortsauflösend markieren, welche der Zuverlässigkeitsdaten und/oder der Kartendaten im Laufe der Zeit änderbar sein sollen und welche nicht, und wobei das Schnittstellengerät auch die Markierungsdaten den anderen Daten ortsauflösend zugeordnet zugänglich macht. Es kann demnach nach änderbaren und nicht änderbaren Zuverlässigkeitsdaten und/oder Kartendaten unterschieden werden.

Außerdem wird ein nicht zur patentierten Erfindung gehörendes Verfahren zum Erstellen einer elektronisch nutzbaren Repräsentation einer Umgebung angegeben, in der elektronisch erfassbare Merkmalen vorhanden sind. Das Verfahren umfasst die Schritte

- Bereitstellen von Karten- bzw. Umgebungsrepräsentationsdaten, die ortsauflösend Merkmale der Umgebung angeben oder die Herleitung solcher Merkmalsangaben erlauben,
- Ermitteln von Zuverlässigkeitsdaten einzelner Merkmalsangaben, wobei die Zuverlässigkeitsdaten ortsauflösend angeben, als wie zuverlässig erfassbar die angegebenen Merkmale angesehen werden können, und
- Speichern der Kartendaten und der Zuverlässigkeitsdaten in ortsauflösend einander zugeordneter oder zuordenbarer Weise als Umgebungsrepräsentation.
- Die Zuverlässigkeitsdaten werden zusätzlich zu schon vorhandenen Vorhandenseinswahrscheinlichkeiten von in der Karte repräsentierten Merkmalen ermittelt und gespeichert oder können mit den räumlich zugeordneten Vorhandenseinswahrscheinlichkeiten zu einem einzigen zu speichernden Wert verrechnet werden.

Das Bereitstellen von Kartendaten kann das Ermitteln und/oder Aktualisieren und/oder Abrufen schon existierender Umgebungsrepräsentationsdaten umfassen.

Die Zuverlässigkeitsdaten einzelner Merkmalsbereiche können anhand von Streuungen von zeitnah zueinander ermittelten Messwerten gleicher Kartenbereiche bestimmt werden.

Insbesondere werden die Zuverlässigkeitsdaten einzelner Merkmalsbereiche anhand des Alters von früher ermittelten Messwerten gleicher Kartenbereiche bestimmt. Dabei können ältere Messwerte zu einer geringeren Zuverlässigkeit führen.

Bevorzugt können die Zuverlässigkeitsdaten einzelner Kartenbereiche manuell eingegeben und/oder verändert werden, vorzugsweise über eine graphische Benutzeroberfläche. Hierdurch kann ausgenutzt werden, dass ein Bediener mit Ortskenntnis zusätzliche Informationen über die Zuverlässigkeit bereitstellen kann.

Die Zuverlässigkeitsdaten können während der Nutzung einer Umgebungsrepräsentation nach Maßgabe aktueller Messwerte eines die Umgebungsrepräsentation nutzenden Geräts oder Fahrzeugs und nach Maßgabe von Historiedaten ermittelt und/oder verändert werden. Die Zuverlässigkeitsdaten sind dementsprechend nicht statisch, sondern können insbesondere regelmäßig aktualisiert werden.

Die Merkmalsdaten der Kartendaten geben ortsauflösend eine Vorhandenseinswahrscheinlichkeit eines Merkmals an. Es sind auch Vorhandenseinswahrscheinlichkeiten zusätzlich zu den Zuverlässigkeitsdaten ortsauflösend gespeichert.

Vorteilhafterweise werden die ortsaufgelösten Vorhandenseinswahrscheinlichkeitswerte und die ortsaufgelösten Zuverlässigkeitswerte getrennt gespeichert und/oder zu einem ortsaufgelösten gemeinsamen Parameter verrechnet.

Bevorzugt beschreibt die Umgebungsrepräsentation eine zweidimensionale Fläche oder ein dreidimensionales Volumen. Sowohl Anwendungen in der Ebene als auch im Raum (z.B. mit Drohnen) können auf diese Weise erschlossen werden.

Insbesondere werden für einzelne Kartenbereiche deren Zuverlässigkeitsdaten als unveränderlich gekennzeichnet, vorzugsweise über eine graphische Benutzerschnittstelle. Die so gekennzeichneten Zuverlässigkeitsdaten werden dann nicht mehr verändert.

Die repräsentierte Umgebung ist logisch in eine Vielzahl von (insbesondere gleichen) Kacheln unterteilt, wobei die Kartendaten und die Zuverlässigkeitsdaten kachelweise aufgelöst oder auflösbar oder interpolierbar sind, wobei einer Kachel ein Datentupel zugeordnet oder zuordenbar sein kann, das für diese Kachel mindestens eine Vorhandenseinswahrscheinlichkeit und einen Zuverlässigkeitswert aufweist und optional auch eine Unveränderlichkeitskennzeichnung.

Vorteilhafterweise sind in der repräsentierten Umgebung mehrere bekannte Reflektorpunkte angebracht, wobei die Kartendaten und die Zuverlässigkeitsdaten reflektorpunktweise aufgelöst oder auflösbar gespeichert werden, wobei einem Reflektorpunkt optional auch eine Unveränderlichkeitskennzeichnung zugeordnet ist oder zuordenbar ist. Bei dem Reflektorpunkt kann es sich z.B. um einen optischen Reflektor handeln. Als Reflektorpunkt können aber auch z.B. RFID-(Radio Frequency Identification)-Transponder verwendet werden, die mittels eines RFID-Lesers erfasst werden

Bevorzugt sind einer Kachel bzw. einem Reflektorpunkt historierelevante Daten zugeordnet oder zuordenbar, insbesondere einer oder mehrere der folgenden Werte

- Zahl der Erfassungen eines Merkmals an der Kachel
- Zahl der Nichterfassung eines Merkmals an der Kachel,
- Zahl der Änderungen der Erfassung eines Merkmals,
- Datum der letzten Erfassung,
- Datum der ersten Erfassung.

Die vorstehend genannten Werte können jeweils zur Ermittlung der Zuverlässigkeit herangezogen werden.

Vorteilhafterweise werden die aktuellen Messwerte durch Vermessen der Umgebung aus der Perspektive des beweglichen Objekts gewonnen, wobei die Vermessung das Erfassen mehrerer Merkmale der Umgebung aufweist und die Messwerte einer zeitlichen Analyse unterzogen werden.

Bevorzugt werden die Zuverlässigkeitsdaten jeweils als Faktor zwischen 0 und 1 ermittelt und/oder als dazu logarithmischer Wert zwischen $-\infty$ und 0.

Angegeben wird auch eine Vorrichtung zur Durchführung des beschriebenen Verfahrens. Sie kann ein einzelner Rechner sein oder ein Rechnernetz, insbesondere ein verteiltes System mit mindestens zeitweise miteinander vorzugsweise drahtlos verbundenen Rechnern, wobei mindestens einer der Rechner Teil eines autonom navigierenden Fahrzeugs ist, das Sensorik zur Umgebungserfassung aufweist. Das verteilte System kann ein peer-to-peer-System oder ein server-client-system sein oder eine Mischform, etwa einem Server nur zu synchronisierenden/administrativen Tätigkeiten.

Angegeben wird auch ein Datenträger mit Daten darauf, die eine Umgebung repräsentieren, mit Kartendatenteilen, die ortsauflösend Merkmale einer Umgebung angeben oder die Herleitung solcher Merkmalsangaben erlauben, und mit Zuverlässigkeitsdatenteilen einzelner angegebener Merkmale, die von den Kartendatenteilen repräsentiert sind, wobei die Zuverlässigkeitsdaten ortsauflösend angeben, als wie zuverlässig erfassbar die jeweils repräsentierten Merkmale angesehen werden können, und mit Belegungswahrscheinlichkeitsdatenteilen, die ortsauflösend angeben, als wie wahrscheinlich vorhanden ein von dem Belegungswahrscheinlichkeitswert repräsentiertes Merkmal eingeschätzt wurde.

Angegeben wird auch ein Datenträger mit Daten darauf, die eine Umgebung repräsentieren und die mit einem beschriebenen Verfahren oder einer beschriebenen Vorrichtung erzeugt wurden.

Angegeben wird auch ein Datenträger mit Daten darauf, die computerausführbaren Code darstellen, der, wenn ausgeführt, ein beschriebenes Verfahren implementiert.

Ein Verfahren zur Positionsermittlung eines beweglichen Objekts in einer Umgebung, in der elektronisch erfassbare Merkmale vorhanden sind, hat die Merkmale des Anspruchs 1.

Ein Verfahren zur Wegplanung für ein bewegliches Objekt in einer Umgebung hat die Merkmale des Anspruchs 10.

Weitere Merkmale ergeben sich aus der nachfolgenden Beschreibung. Es wird auf die beiliegenden Zeichnungen Bezug genommen, es zeigen:

Fig. 1    schematisch eine Umgebung, die elektronisch zu repräsentieren ist,

Fig. 2    eine schematische Darstellung eines Teils einer Repräsentation einer Umgebung,

Fig. 3    einander zugeordnete oder zuordenbare Datenteile eines Merkmals einer Umgebungsrepräsentation,

Fig. 4a    schematisch die Situation bei der Ortsermittlung eines mobilen Geräts,

Fig. 4b    Darstellungen zu einem Partikelfilteralgorithmus, und

Fig. 5    schematisch ein autonom fahrendes Fahrzeug als ein Beispiel eines Geräts, in dem die beschriebene Technik implementiert sein kann.

Nachfolgend werden als "Merkmale" elektronisch erfassbare Objekt bezeichnet, die für die Bewegung eines sich autonom bewegenden Objekts, etwa eines fahrenden Fahrzeugs, Relevanz haben, etwa ein Bewegungshindernis darstellen. Auch deren Abbild in einer Kartierung/Umgebungsrepräsentation kann mit "Merkmal" angesprochen sein. Es kann sich hierbei etwa um Wände, Regalstützen, Türen, Lagergut, andere Fahrzeuge, Personen, Fensterflächen, Verglasungen, Reflektoren oder ähnliches handeln - oder deren Abbild in einer Umgebungsrepräsentation.

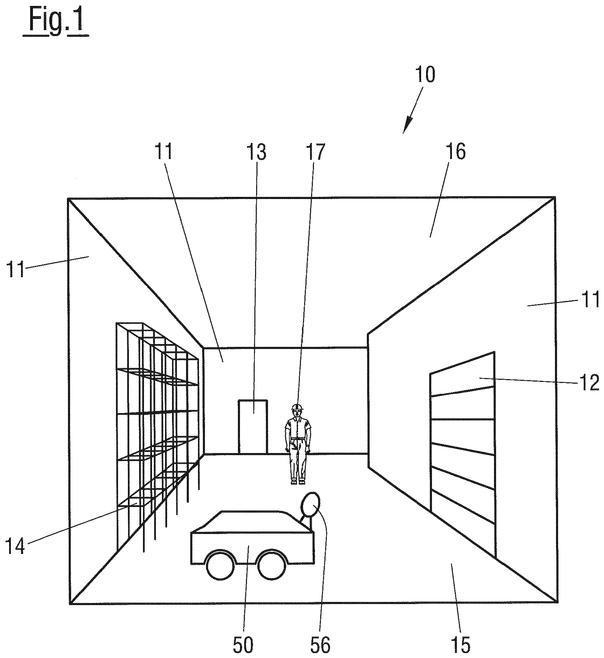

Fig. 1 zeigt schematisch eine typische Umgebung, die elektronisch nutzbar repräsentiert werden soll. Gezeigt ist ein breiter Gang, der hinten rechts abknickt, hinten eine Tür 13 aufweist, an der rechten Wand ein Rolltor 12 und an der linken Wand ein Regal 14. Er ist umgrenzt von Wänden 11, einem Boden 15 und einer Decke 16. Eine Person 17 bewegt sich in dem Gang.

Gezeigt ist auch ein Fahrzeug 50, das als autonom fahrendes Fahrzeug verstanden wird, etwa um Güter in bestimmter Weise zu transportieren. Das Fahrzeug 50 weist eine Vermessungsvorrichtung 56 auf, mittels derer die Fahrzeugumgebung vermessen werden kann.

Die Vermessungsvorrichtung 56 kann beispielsweise in einer Ebene parallel zum Boden 15 mit gewünschtem oder vorgegebenem oder einstellbarem Abstand vorhandene Hindernisse um das Fahrzeug bzw. bewegliche Objekt herum detektieren. Sie kann ein LIDAR (Light Detection and Ranging) oder LADAR (Laser Detection and Ranging) aufweisen, mittels derer in gewünschter Winkel- oder Ortsauflösung Hindernisse zu erkennen versucht wird. Die Vermessungsvorrichtung 56 kann schnell vorzugsweise rund um das Fahrzeug herum oder wenigstens in einem Sektor in Vorausrichtung der Bewegung scannen und auf diese Weise Datenpaare von Richtung und Abstand zu einem zurückstreuenden Merkmal erzeugen. Sie kann in einer Ebene scannen oder auch den Raum dreidimensional abtasten und vermessen.

Schwierigkeiten treten beispielsweise dann auf, wenn in einer elektronischen Repräsentation der Szenerie 10 das Regal 14 als sicher vorhanden markiert ist, aber zufälligerweise bei der Umgebungsvermessung mit der Vermessungsvorrichtung 56 die vertikalen Stützen des Regals 14 nicht getroffen wurden, so dass nur die Wand dahinter erkannt wurde. Ähnliche Schwierigkeiten treten auf, wenn bei der Kartenaktualisierung schon früher eine Person 17 als zurückstreuendes Ziel erkannt wurde und dementsprechend zu gewissen Kartenaktualisierungen führte, aber bei der momentanen Vermessung/Scan nicht vorhanden ist und deshalb keine Rückstreuung bewirkt. Ähnliche Schwierigkeiten ergeben sich bei transparenten Hindernissen, wie etwa einer Glastür 13 oder allgemein bei Türen und Toren 12, die manchmal geöffnet und manchmal geschlossen sein können.

In solchen Situationen sind auch Belegungswahrscheinlichkeiten von Kacheln (Vorhandenseinswahrscheinlichkeiten von Merkmalen/Hindernissen) nicht hilfreich. Das Regal 14 bzw. dessen Stützen kann als konstant vorhanden angesehen werden und hat demnach eine Belegungswahrscheinlichkeit von 1. Trotzdem kann seine Erfassung aus den genannten Gründen misslingen. Eine Glastür 13 kann gelegentlich geöffnet sein und hat deshalb vielleicht eine Belegungswahrscheinlichkeit/Vorhandenseinswahrscheinlichkeit von 0,9. Die Tatsache aber, dass sie aus Glas gefertigt ist, macht ihre Erfassung schwierig, so dass sie tatsächlich möglicherweise nicht regelmäßig erfasst wird, selbst wenn sie geschlossen ist. Die beiden genannten Beispiele betreffen erfassungstechnische Schwierigkeiten von Merkmalen (Regal 14, Tür 13).

Selbst aber wenn Merkmale an sich gut und vergleichsweise sicher zu erfassen sind (etwa die Person 17, das Rolltor 12, wenn geschlossen), können Belegungswahrscheinlichkeiten/Vorhandenseinswahrscheinlichkeiten nicht hinreichend aussagekräftige Daten geben. Wird beispielsweise angenommen, dass ein bestimmtes Areal des Ganges zu 5% der Zeit von einer Person 17 eingenommen wird und deshalb der oder den zugehörigen Kacheln eine Belegungswahrscheinlichkeit von 5% (0,05) zugeordnet wird, sagt dies nichts über die Dynamik oder die Häufigkeit der Änderungen des Belegtzustands der jeweiligen Kacheln aus.

Um den genannten Schwierigkeiten abzuhelfen, weist eine Umgebungsrepräsentation neben den Merkmalsdaten (die beispielsweise ja/nein-Angaben zur Kachelbelegung oder Belegungswahrscheinlichkeiten von Kacheln sein können) auch Zuverlässigkeitsdaten auf, die angeben, als wie zuverlässig erfassbar ein jeweiliges Merkmal angesehen und beurteilt wurde.

Allgemein kann gesagt werden, dass die Zuverlässigkeitsdaten als Faktor mit einem analogen Wert zwischen 0 (sehr unzuverlässig) und 1 (sehr zuverlässig) angegeben sein können. Diese Normierung hat den Vorteil, dass sie dann in stochastischer Rechnerei entsprechend den üblichen stochastischen Regeln verwendet werden können.

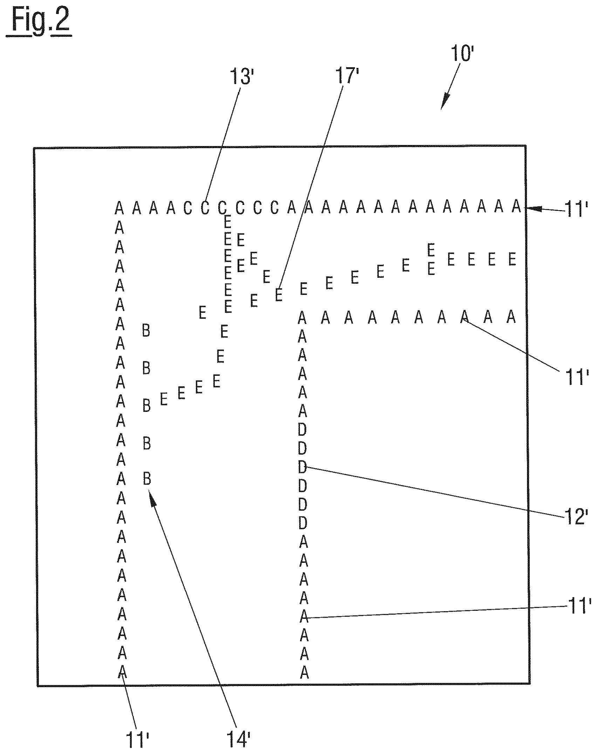

Fig. 2 zeigt schematisch und qualitativ die Zuordnung von Zuverlässigkeitsdaten zu Kacheln einer Szenerie, die in etwa der der Fig. 1 entspricht. Nicht gezeigt sind die ebenfalls vorhandene Belegungswahrscheinlichkeiten oder Belegungen der Kacheln der Szenerie. Gezeigt ist schematisch die Draufsicht auf den in Fig. 1 gezeigten Gang. Außerdem sind schematisch einige Zuverlässigkeitseinträge mit Buchstaben angedeutet. Mit 11' sind Abbilde von Wandbereichen angedeutet, die als zuverlässig vorhanden und erfassbar angesehen werden können. Die Belegungswahrscheinlichkeit hierfür (nicht gezeigt) wäre 1, da die Wände stabil stehen, und die Zuverlässigkeitsdaten können auch als 1 oder sehr nahe bei 1 (0,99) festgelegt werden.

Für das Regal 14 sind zugeordnete Zuverlässigkeitswerte 14' mit B markiert. Die (nicht gezeigte) Belegungswahrscheinlichkeit der zugehörigen Kacheln ist 1 (100%), da das Regal ständig vorhanden ist. Die Zuverlässigkeit kann aber geringer sein, etwa 0,8, da es gelegentlich vorkommen kann, dass eine Regalstütze beim Vermessen der Umgebung durch die Vermessungsvorrichtung 56 nicht erfasst wird, obwohl sie vorhanden ist.

Ähnliches gilt für den Bereich 13' der Tür 13. Wird angenommen, dass die Tür 5% der Zeit geöffnet (nicht vorhanden) ist, ist die Belegungswahrscheinlichkeit der zugehörigen Kacheln 95% (0,95). Da aber die Tür aus Glas ist, kann sie oft der Erfassung entgehen, so dass die zugehörigen Zuverlässigkeitswerte beispielsweise 0,3 sein können.

Im Beispiel von Person 17 und Rolltor 12 können die zugeordneten Zuverlässigkeitswerte 17' oder 12' vergleichsweise hoch sein, beispielsweise 0,98, wenn die Erfassung dieser Merkmale vergleichsweise zuverlässig erfolgen kann, während die Belegungswahrscheinlichkeiten gering sein können, bspw. 0,1.

Auf diese Weise entstehen neben der eigentlichen Kartierung (mittels ja/nein-Markern oder Belegungswahrscheinlichkeiten = Vorhandenseinswahrscheinlichkeiten) weitere ortsauflösende bzw. ortsaufgelöste Daten. Es sei in diesem Zusammenhang darauf verwiesen, dass die Ortsauflösung der Belegungswahrscheinlichkeiten bzw. Vorhandenseinswahrscheinlichkeiten gleich der Ortsauflösung der Zuverlässigkeitsdaten sein kann oder auch anders sein kann.

Auch wird nochmals darauf verwiesen, dass der Bezug auf Kacheln und gridmapähnliche Darstellungen nur der Veranschaulichung dient und keine Aussage darüber treffen soll, wie tatsächlich die Speicherung der Daten erfolgt. Sie können in anderen Formaten als Gridmap gespeichert sein. Auch sei nochmals wiederholt, dass statt der Erfassung realer Objekte (Wand, Regal, Person, Tür, ...) die Erfassung dedizierter Objekte vorgesehen sein kann, etwa von Reflektoren, die in Reflektorkarten kartiert sein können. Auch bei diesen Merkmalen können Erfassungsschwierigkeiten auftreten, etwa wenn sie schlicht verstellt sind, verstauben oder ähnliches.

In Fig. 2 sind mit den A bis E Bereiche unterschiedlicher Zuverlässigkeitsdaten angedeutet. Mit gleichen Buchstaben soll hier nicht ausgesagt werden, dass die Zuverlässigkeitsdaten alle gleich sind. Aber sie tragen jedenfalls ähnlichen Umständen Rechnung und können sehr ähnlich zueinander sein.

Die Verwendung der ermittelten Zuverlässigkeitswerte erfolgt derart, dass sie letztendlich in die Bewertung aktueller Vermessungsergebnisse zur Positionierung oder bei der Bewertung von Wegstellen bei der Routenplanung einfließen. Die Gestaltung ist derart, dass zuverlässiger bewertete Merkmale stärker gewichtet werden als unzuverlässiger bewertete Merkmale. Dies führt dazu, dass als zuverlässiger bewertete Merkmale das Ergebnis stärker dominieren als unzuverlässigere, so dass schlussendliche Ergebnisse mit höherer Wahrscheinlichkeit richtig sind bzw. höher wahrscheinlich näher am objektiv richtigen Wert liegen.

Im Folgenden wird ein nicht zur geschützten Erfindung gehörendes Verfahren zur Bestimmung einer elektronisch nutzbaren Repräsentation einer Umgebung angegeben. Die Repräsentation repräsentiert Merkmale der Umgebung in ortsaufgelöster Weise. Das Verfahren hat die Schritte Bereitstellen von Kartendaten, das Ermitteln von Zuverlässigkeitsdaten und das Speichern der Kartendaten und der Zuverlässigkeitsdaten in ortsauflösend einander zugeordneter oder zuordenbarer Weise als Umgebungsrepräsentation.

Das Bereitstellen der Kartendaten kann das neue Ermitteln von Kartendaten umfassen oder deren Aktualisierung oder das Abrufen schon existierender Kartendaten. Als Kartendaten werden hier Merkmalsrepräsentationen angesehen, also Angaben darüber, wo in der repräsentierten Umgebung ein Merkmal (Hindernis) vorhanden ist. Wie schon gesagt kann die Angabe pro Kachel ein schlichtes Ja/Nein (0/1) sein, oder eine graduelle Vorhandenseinswahrscheinlichkeit.

Den so bereitgestellten Kartendaten werden Zuverlässigkeitsdaten ortsauflösend bzw. ortsaufgelöst zugeordnet. Die Zuverlässigkeitsdaten haben die oben beschriebene Qualität. Alle Daten werden dann ortsauflösend zugeordnet oder zuordenbar gespeichert.

Allgemein kann gesagt werden, dass die Ermittlung der Zuverlässigkeitswerte einmal anfänglich initialisierend und/oder fortlaufend während der realen Nutzung der Daten in neu anlegender oder aktualisierender Weise erfolgen kann. Es kann eine Default-Vergabe von Zuverlässigkeitswerten vorgesehen sein, die beispielsweise 0,95 für alle Kacheln setzt. Ausgehend davon können später Veränderungen vorgenommen werden.

Die eigentliche Ermittlung der Zuverlässigkeitsdaten kann auf mehrere unterschiedliche Arten geschehen. Sie können beispielsweise manuell eingegeben werden, etwa über eine grafische Benutzerschnittstelle. Beispielsweise kann den Kacheln B des Abbilds 14' des Regals 14 eine geringere Zuverlässigkeit als 1 zugeordnet werden. Ähnliches gilt für die Kacheln C des Abbilds 13' der Glastür 13. Kacheln A von Abbilden 11' von Wänden können auf einen sehr hohen Zuverlässigkeitswert (0,99 oder 1) gesetzt werden. Andere Bereiche können entsprechend ihrer Erfassbarkeit andere Werte erhalten.

Eine weitere Möglichkeit der Ermittlung der Zuverlässigkeitsdaten ist es, in sie eine Zeitkomponente einfließen zu lassen, etwa dergestalt, dass die Zuverlässigkeit repräsentierter Merkmale im Laufe der Zeit sinkt, was der Erfahrung Rechnung trägt, dass im Laufe der Zeit Veränderungen vorkommen können. Um dies bewerkstelligen zu können, können weiterhin Historiedaten ortsauflösend gespeichert sein, die Rückschlüsse über den Verlauf der Merkmalserfassungen der einzelnen Kacheln erlauben.

Als Historiedaten können gespeichert werden:

- Datum der letzten Erfassung (wobei Datum tatsächlich das Datum im landläufigen Sinne sein kann, und/oder ein mehr oder minder genauer Zeitpunkt bis hin zu sekundengenau oder ähnliches),
- Zählen, wie oft eine Kachel als belegt erkannt wurde,
- Zählen, wie oft eine Kachel als frei erkannt wurde,
- Zählen, wie oft eine Änderung des Belegtzustands einer Kachel erkannt wurde,
- Anlagedatum des Kartierungswerts (d.h. Anlagedatum der Vorhandenseinswahrscheinlichkeit).

Auch diese Daten werden ortsauflösend erhoben und gespeichert und dann entsprechend zur ortsauflösenden Bestimmung von Zuverlässigkeitsdaten herangezogen. Anhand der oben beschriebenen Historiedaten kann die genannte zeitliche Komponente einfließen. Es können auch zeitliche Muster untersucht werden, die dann zur Ermittlung eines Zuverlässigkeitswerts führen.

Eine weitere Möglichkeit der Bestimmung von Zuverlässigkeitsdaten von Merkmalen/Kacheln ist es, Streuungen bei Merkmalserfassungen zeitnaher Vermessungen auszuwerten. "Zeitnah" kann hierbei bedeuten, dass der zeitliche Abstand der Vermessungen < 20 min, < 10 min, < 5 min, < 2 min oder < 1 min oder < 30 s sein soll. Wenn bei solchen zeitlich knapp beabstandeten Vermessungen der Umgebung unterschiedliche Ergebnisse in einer bestimmten kartierten Region erscheinen (d.h. Streuungen ein vorbestimmtes Maß überschreiten), ist es wahrscheinlich, dass diese unterschiedlichen Ergebnisse nicht auf Veränderungen des Zustands der Umgebung zurückzuführen sind, sondern darauf, dass die Vermessung derselben unzuverlässig ist.

Wenn beispielsweise ein Fahrzeug 50 (in Fig. 1) am dort ebenfalls gezeigten Regal 14 vorbeifährt und etwa im Abstand von jeweils 1 s mehrere Messungen macht und dabei gelegentlich die Regalstützen "sieht" und gelegentlich nicht, weil diese Stützen tendenziell filigrane Strukturen sind, werden sich im Bereich des Regals 14 streuende Werte ergeben, die manchmal ein Vorhandensein anzeigen und manchmal nicht. Aus solchen Streuungen kann gefolgert werden, dass am jeweiligen Ort unzuverlässig erfassbare Merkmale vorhanden sind. Ähnliches gilt beispielsweise für die Erfassung einer Glastür oder Glasfläche.

Um solche Auswertungen vornehmen zu können, können ältere Vermessungsergebnisse zwischengespeichert werden, ohne gleich kartiert zu werden. "Alte" zwischengespeicherte Daten können dann gelöscht werden. Insoweit kann das Speichern von Historiedaten auch die Speicherung von Messhistorien umfassen, was wiederum das Zwischenspeichern älterer Vermessungen umfasst. Die Begrenzung solcher Historien kann anhand der Zeit erfolgen (also etwa dahingehend, dass alles, was älter als eine Schwelle, etwa 1 Tag oder 1 h oder älter als 1/2 h oder älter als 10 min oder älter als 5 min ist, gelöscht wird) oder als Speichern einer Anzahl von jüngsten Vermessungen (also beispielsweise 20 oder 15 oder 10 oder 5 Vermessungen) und Ersetzen der jeweils ältesten durch die jeweils aktuell gewonnene.

Zuverlässigkeitswerte können auch nach Maßgabe der Art der Generierung von zugehörigen Belegungswahrscheinlichkeiten vergeben und dann gespeichert werden. Belegungswahrscheinlichkeiten können bspw. durch besondere Mustererkennungsverfahren und/oder Mustervervollständigungsverfahren gesetzt oder ergänzt werden. Dann können zugehörige Zuverlässigkeitsdaten bspw. auf einen bestimmten Defaultwert gesetzt werden, der anders sein kann als womöglich anderweitig verwendete Defaultwerte, oder die Zuverlässigkeitswerte können nach Maßgabe einer vorher vorgenommenen quantitativen Abschätzung der Zuverlässigkeit der Mustererkennung bzw. -vervollständigung gesetzt werden.

Soweit für Reflektorkarten die Zuverlässigkeit der Erfassung jeweiliger Reflektoren zu ermitteln ist, kann die Standardabweichung der aus den einzelnen Messungen bestimmten Reflektormittelpunkte als Maß für die Zuverlässigkeit der Information verwendet werden.

Allgemein können die Zuverlässigkeitswerte veränderlich sein und mit besonderen Verfahren überarbeitet bzw. aktualisiert werden. Dies kann bspw. in Echtzeit nach Maßgabe von während der Nutzung der Umgebungsrepräsentation von nützenden beweglichen Objekten 50 erhobenen Daten erfolgen. Es können aber auch einzelne Kartenbereiche (Bereiche mehrerer Kacheln, Merkmale) als unveränderlich in ihren Zuverlässigkeitswerten markiert werden. Beispielsweise kann für Wände entsprechend Bereichen A in Fig. 2 festgelegt werden, dass deren einmal gesetzter Zuverlässigkeitswert (von etwa 0,98) nicht nach Maßgabe späterer Ereignisse modifiziert werden soll. Dieser Unveränderlichkeitsmarker kann auch wieder ortsauflösend gesetzt und zugeordnet bzw. zuordenbar gespeichert werden.

Der Zuverlässigkeitswert eines Merkmals (einer Kachel) kann beispielsweise als Wert zwischen 0 und 1 gespeichert sein und in dieser Formatierung und Skalierung in stochastischen Rechnungen verwendet werden. Es sind grundsätzlich aber auch andere Speicherformate denkbar. Diese sind dann bei der jeweiligen Verrechnung entsprechend zu berücksichtigen.

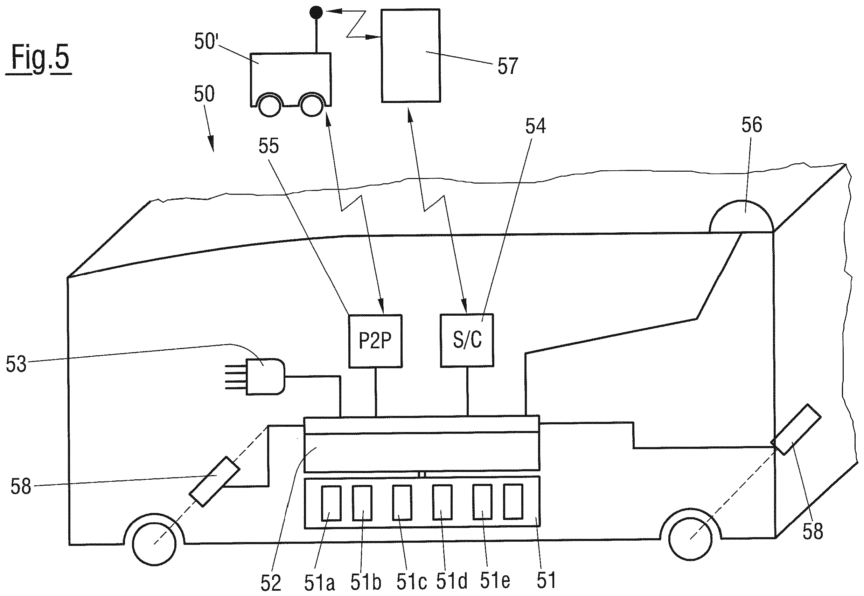

Ein Aspekt der Darbietung von Zuverlässigkeitswerten ist auch eine Vorrichtung zur Repräsentation einer Umgebung, die mit anderen Vorrichtungen zusammenarbeitet, die die Umgebungsrepräsentation nutzen wollen, etwa zur Ortsbestimmung, zur Navigation/Wegfindung oder zur Aktualisierung derselben. Die Umgebungsrepräsentationsvorrichtung 50 ist schematisch in Fig. 5 gezeigt.

Ganz allgemein sei vorab gesagt, dass die Hardware zur Implementierung der beschriebenen Verfahren und Verfahrensschritte üblicherweise ein geeignet programmierter Rechner oder ein verteiltes System mit mehreren Rechnern ist. Wenn ein verteiltes System vorgesehen ist, kann es ein peer-to-peer-System sein, also ein System mehrerer gleichartiger Rechner, die zumindest zeitweise drahtlos und/oder leitungsgestützt verbunden sind, oder es kann ein Server/Client-System sein, in dem die Funktionen geeignet verteilt sind. Auch Mischformen hierzu sind denkbar, etwa derart, dass die wesentlichen Verfahrensschritte in den einzelnen Fahrzeugen 50, 50' vorgenommen werden und ein zentraler Server 57 Synchronisationen vornimmt.

Das Fahrzeug 50 weist einen Speicher 51 auf, in dem die bisher angesprochenen Daten gespeichert sind. Angedeutet sind mehrere Speicherbereiche 51a bis 51e, wobei dies nur eine grafische Repräsentation ist und nicht notwendigerweise ein Abbild der tatsächlich vorhandenen Daten- und Speicherstruktur sein muss. 51a symbolisiert die Speicherung von Kartendatenteilen, also Angaben zu Merkmalen/Hindernissen. 51b symbolisiert die Speicherung der Zuverlässigkeitsdaten z. B. im weiter oben beschriebenen Format. 51c symbolisiert die Speicherung von Historiedaten, wie schon dargestellt. 51d symbolisiert die Speicherung von Markern für die Veränderlichkeit bestimmter Daten. 51e symbolisiert einen Zwischenspeicher zum zeitweisen Speichern etwa von Vermessungsergebnissen. Weitere Speicherbereiche können vorgesehen sein entsprechend den Notwendigkeiten der digitalen Gerätschaften.

52 symbolisiert ein Schnittstellengerät, das die gespeicherten Daten lesend zugänglich macht und/oder einspeichernd pflegt, aufbaut und aktualisiert. Die Ortsauflösung der einzelnen Datenteile kann zueinander gleich oder unterschiedlich sein. Wenn unterschiedlich, können Interpolationen zur Anpassung vorgenommen werden oder Zuordnung feiner gerasteter Daten zu "in der Nähe liegenden" Daten gröberer Rasterung vorgenommen werden.

Allgemein kann das Schnittstellengerät 52 die nötige ortsauflösende Zuordnungen der Datenteile beim Auslesen vornehmen, wenn die Zuordnungen sich nicht sowieso aus der Speicherstruktur ergeben. Das Schnittstellengerät kann auch beim Auslesen womöglich nötige Konversion jeweiliger Vektordaten, wenn das das Speicherformat der Daten ist, in geographisch verteilte Gridmapdaten vornehmen und beim Einlesen umgekehrt dazu arbeiten.

Die Schnittstellenvorrichtung 52 kann auch Schnittstellen zu den übrigen systemnotwendigen Teilen aufweisen, also etwa Steckverbindungen 53 für leitungsgebundene Kommunikation, die zumindest zeitweise genützt werden kann, eine peer-to-peer-Schnittstelle 55, eine Server-Client-Schnittstelle 54 und eine Verbindung hin zur Messvorrichtung 56. Die peer-to-peer-Schnittstelle 55 und die Server-Client-Schnittstelle 54 können drahtlos sein und technisch betrachtet die gleiche Schnittstelle sein, beispielsweise eine Funkverbindung, die mit verschiedenen Adressen verwendet wird. Sie können aber auch technisch unterschiedlich angelegt sein, abhängig von technischen Notwendigkeiten wie Bandbreite, Zuverlässigkeit, Reichweite und ähnlichem.

Die Messvorrichtung 56 dient dazu, die Umgebung des Fahrzeugs zu vermessen. Es kann sich hierbei um das schon genannte LIDAR oder LADAR handeln. Aber auch Bildverarbeitung, insbesondere stereoskopisch, ist denkbar. Sie ist dazu ausgelegt, mindestens in Fahrtrichtung voraus und vorzugsweise vollständig um das Fahrzeug herum die Umgebung zu erfassen und Merkmale nach Richtung und Abstand zu erkennen. Die Vorrichtung 56 kann weitgehend autonom arbeiten und periodisch die Umgebung vermessen. Hierbei fallen die schon genannten Daten zur Erfassung von Merkmalen an, die dann zwischengespeichert und weiterverarbeitet werden können. Die Schnittstellenvorrichtung 52 ist darüber hinaus allgemein als Fahrzeugsteuerung zu verstehen, die die allgemeinen Fahrzeugfunktionen steuert, etwa Steuerung der Antriebsmotoren 58, der Bremsen, Lenkung und ähnliches.

Die beschriebenen Verfahren zur Ermittlung der Zuverlässigkeitswerte können im verarbeitenden Teil der Schnittstellenvorrichtung 52 ausgeführt werden. Sie können aber auch in einem angebundenen Server durchgeführt werden.

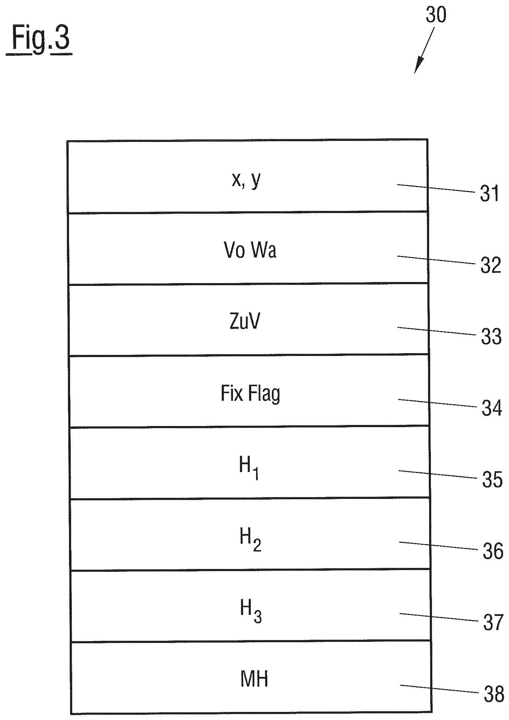

Fig. 3 zeigt schematisch einen Datentupel 30, das einem Merkmal der repräsentierten Umgebung (einer Kachel bei Darstellung als Gridmap) zugeordnet oder zuordenbar sein kann. Möglich, aber nicht notwendig ist es, dass einem solchen Tupel explizit Koordinatendaten 31 zugeordnet sind, die den Ort in der repräsentierten Umgebung in der nötigen Genauigkeit/Auflösung angeben. Vorgesehen ist eine Merkmalsangabe 32, die Angaben zum Vorhandensein eines Merkmals macht. Sie kann 0/1 sein oder die schon angesprochene Vorhandenseinswahrscheinlichkeit eines Merkmals (Belegungswahrscheinlichkeit einer Kachel). Mit 33 ist die wie beschrieben erhobene Zuverlässigkeitswahrscheinlichkeit angedeutet, die den jeweiligen Merkmalen/Kacheln zugeordnet wird. Mit 34 (optional) ist eine Markierung angedeutet, die angibt, ob die bei 33 gespeicherte Zuverlässigkeitswahrscheinlichkeit aktualisiert werden soll oder nicht. 35 bis 37 (optional) deutet verschiedene Historiedaten an, die kachelspezifisch vorhanden sind, wie weiter oben beschrieben.

Unabhängig davon können die zeitweise gespeicherten Vermessungshistorien gespeichert sein. Sie können aber auch kachelweise abgelegt sein, was durch 38 angedeutet ist. Weitere Speicherungen können ortsauflösend /kachelweise /merkmalsweise vorgenommen werden. Wie schon mehrfach gesagt, kann das Speicherformat ähnlich wie in Fig. 3 gezeigt für jede Kachel implementiert sein.

Die Daten repräsentieren das, was in Fig. 3 für eine einzige Kachel/für ein einziges Merkmal dargestellt ist, für die gesamte repräsentierte Umgebung. Schematisch ist die Speicherung dieser Daten auch in Fig. 5 zu Bezugsziffer 51 mit den einzelnen Speicherbereichen 51a bis 51e angesprochen worden.

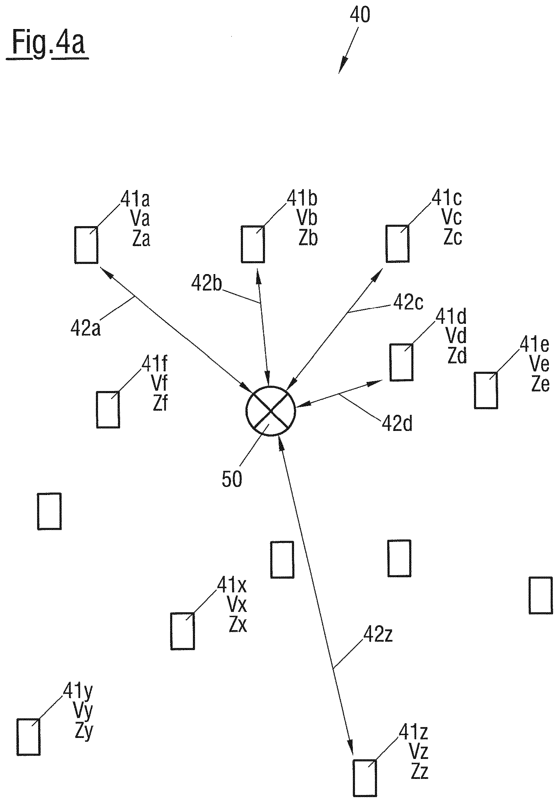

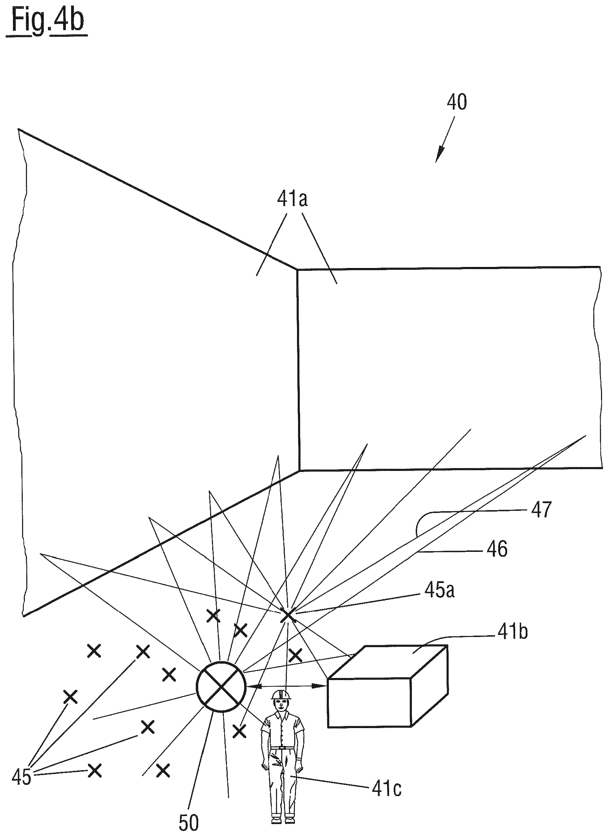

Es wird nun Bezug nehmend auf Fig. 4 ein Verfahren zur Positionsermittlung eines beweglichen Objekts 50 in einer Umgebung, in der elektronisch erfassbare Merkmale vorhanden sind, beschrieben. Merkmale können dabei wieder als bewegungsrelevante Objekte in der Umgebung, insbesondere als Bewegungshindernisse für das bewegliche Objekt verstanden werden. In der Umgebungsrepräsentation entspricht jedem Merkmal bei Darstellung/Sichtweise/Speicherung als Gridmap eine oder mehrere Kacheln.

Die Positionsermittlung kann in einer zweidimensionalen Umgebungsrepräsentation/Karte erfolgen, etwa für ein in einer Umgebung fahrendes Fahrzeug, oder dreidimensional, etwa für einen arbeitenden Roboter oder fliegende Gerätschaft, z. B. eine Drohne. Dementsprechend ist die Umgebungsrepräsentation zweidimensional oder dreidimensional aufgebaut. Wie bisher wird ein zweidimensionales Beispiel beschrieben, ohne damit die Anwendung auf drei Dimensionen ausschließen zu wollen.

Die Umgebungsvermessung im Dreidimensionalen geschieht nicht nur im Kreis um das Fahrzeug herum, sondern letztlich vorzugsweise in der das Fahrzeug überwölbenden Halbsphäre oder das Fluggerät oder den Roboterarm umspannenden Sphäre. Auch dann werden Merkmale nach Richtung (Raumrichtung) und Abstand erfasst. Eine Vermessung kann dann die Erfassung mehrerer/vieler/aller Merkmale im gewählten Bereich (Halb/Kugel über/um dem Fahrzeug/Roboter) aufweisen. Die Ortsauflösung wird nach Maßgabe der Notwendigkeiten bzw. technischen Fähigkeiten gewählt.

Fig. 4a zeigt stark schematisiert eine Umgebung 40. Das eingekreiste Kreuz symbolisiert das Fahrzeug 50. Um das Fahrzeug 50 herum verteilt sind elektronisch erfassbare, mit Vierecken symbolisierte Merkmale 41a, 41b, ..., 41z. Sie können beispielsweise den in Fig. 1 gezeigten Wänden, Türen, Regalen, Personen und ähnlichem entsprechen. Jedem betrachteten Merkmal (bzw. jeder betrachteten Kachel) ist eine Vorhandenseinswahrscheinlichkeit V und eine Zuverlässigkeit Z zugeordnet. Die Vorhandenseinswahrscheinlichkeit sagt, wie wahrscheinlich auf der Kachel ein Merkmal/Fahrhindernis bzw. Bewegungshindernis vorhanden ist oder nicht. Die Zuverlässigkeit gibt an, als wie zuverlässig erfassbar das jeweilige Merkmal, das von der jeweiligen Kachel repräsentiert wird, beurteilt wurde. Dementsprechend sind dem Merkmal bzw. der Kachel 41a Va und Za zugeordnet, 41b sind Vb und Zb zugeordnet und 41z sind Vz und Zz zugeordnet.

Bei einer Umgebungsvermessung (etwa mit LIDAR, LADAR, stereoskopischer Bildverarbeitung oder ähnlichem) sollen theoretisch alle Merkmale oder Kacheln 41a mit Merkmalen darin erfasst werden, indem sie beispielsweise ausgesandtes (Laser-)Licht zurück Richtung Vermessungsgerät 56 streuen. Erfassung kann dabei Detektion von Richtung und Abstand des zurückstreuenden Merkmals bedeuten. Der theoretisch vollständigen Erfassung aller Merkmale während eines Umgebungsscans stehen jedoch praktische Hindernisse entgegen, etwa die begrenzte räumliche Auflösung und andere Widrigkeiten wie etwa Transparenz eines Merkmals (Hindernisses) und ähnliches. Mit den Pfeilen 42a, 42b, 42c, 42d, 42z sind die Erfassungen der jeweiligen Merkmale 41a, 41b, 41c, 41d und 41z angedeutet. Versucht wird die Erfassung für alle Merkmale 41a bis 41z. Der Übersichtlichkeit halber wurde aber auf die Vielzahl der zugehörigen Pfeile verzichtet.

Die Merkmale der Kacheln 41a bis 41z sind unterschiedlich zuverlässig erfassbar. Sie können schwierig erfassbar sein, weil sie beispielsweise klein oder filigran sind (Stütze des Regals 14) oder weil sie transparent/semitransparent sind (Glastür 13). Andere Merkmale wie beispielsweise Wände können sehr gut erfassbar sein. Die durch die jeweiligen Kacheln 41a repräsentierten Merkmale sind deshalb unterschiedlich zuverlässig erfassbar und haben unterschiedliche Werte Za bis Zz, wie schon beschrieben.

Bei der Positionsermittlung vermisst das bewegliche Objekt seine Umgebung aus seiner momentanen Perspektive heraus, indem Erfassungen 42 der einzelnen Merkmale/Kacheln 41 vorgenommen werden. Das Vermessungsergebnis (die Gesamtheit der gewonnenen Erfassungen 42 der erfassten Merkmale) wird dann bewertet. Bei dieser Bewertung geht die Zuverlässigkeit der Erfassung der einzelnen Merkmale ein. Aus dem Bewertungsergebnis wird die Position des Fahrzeugs 50 in der Karte (repräsentierte Umgebung) bestimmt. Die Zuverlässigkeiten können als Gewichtungen der einzelnen Erfassungen 42 eingehen. Damit gehen zuverlässiger erfassbare Merkmale höhergewichtet in das Ergebnis ein, während unzuverlässigere Merkmale niedriger gewichtet in das Ergebnis eingehen. Auf diese Weise ist eine höhere Wahrscheinlichkeit für die Richtigkeit des Positionierungsergebnisses gegeben.

Neben der Zuverlässigkeit geht bei der Gewichtung der einzelnen Erfassungen 42 auch die Belegungswahrscheinlichkeit der von den einzelnen Erfassungen betroffenen Kacheln/Merkmale in die Bewertung der einzelnen Erfassungen ein. Diese kann zusammen mit der Zuverlässigkeit zur Gewichtung der einzelnen Erfassungen herangezogen werden und geht dann in das Gesamtergebnis ein.

Bei der Bewertung des Vermessungsergebnisses wird dieses, insbesondere die einzelnen Merkmalserfassungen 42a - 42z der Vermessung, mit Kartendaten abgeglichen. Es kann ein Vergleich von vermuteten Ergebnissen ausgehend von einer vermuteten Position mit den tatsächlich gewonnenen Vermessungsergebnissen erfolgen, wobei dieser Vergleich entsprechend den einzelnen Erfassungen 42a - z erfolgen kann und jeweils einzeln entsprechend der jeweiligen Zuverlässigkeit und auch Vorhandenseinswahrscheinlichkeiten gewichtet sein kann. Die Bewertungen der einzelnen Erfassungen 42 können dann mathematisch zusammengeführt werden, etwa durch Produktbildung (oder im Logarithmischen durch Summenbildung) und führen so zu einer Gesamtbewertung einer Vermessung.

Zur Positionsermittlung kann insbesondere ein Partikelfilteralgorithmus herangezogen werden, der auch anhand Figur 4b erläutert wird. Er weist die folgenden Schritte auf:
Zunächst wird eine vermutete Position des beweglichen Objekts bestimmt. Dies kann durch "Koppeln" ausgehend von einer früher bekannten Position erfolgen, also Fortschreiben der Position nach Maßgabe anderweitig gewonnener Informationen, etwa Odometrie des Fahrzeugs oder sonstige Informationen wie etwa vorzugsweise stereoskopischer Bildverarbeitung. Auf diese Weise wird eine vermutete (hypothetische) Position des beweglichen Objekts festgelegt. Im Zweidimensionalen ist es eine zweidimensionale Koordinatenangabe, im Dreidimensionalen eine dreidimensionale Koordinatenangabe. In Fig. 4b entspricht dies der Position des Kreuzes 50.

Darüber hinaus werden mehrere oder sogar viele hypothetische Positionen festgelegt, die um das bewegliche Objekt herum verteilt sind. Diese hypothetischen Positionen können vordefiniert sein oder ad hoc erzeugt worden sein. Sie können zufällig verteilt sein oder quasi zufällig sein oder systematisch gesetzt werden. Diese hypothetischen Positionen werden als "Partikel" angesehen. In Fig. 4b sind dies die Kreuze 45, 45a

Als Nächstes wird für jede der festgelegten hypothetischen Positionen 45, 45a (Partikel) aus deren jeweiliger Perspektive heraus digital eine hypothetische Vermessung der Umgebung erzeugt. Dies ist ein theoretisch/digital/elektronisch stattfindender Vorgang, bei dem anhand der Kartendaten und der hypothetischen Position darin ermittelt wird, was eine Erfassungsvorrichtung 56, die an dem jeweiligen hypothetischen Ort steht, "sehen" bzw. erfassen müsste, wenn sie dort stünde. Für jede der hypothetischen Positionen 45, 45a wird auf diese Weise eine hypothetische Vermessung erzeugt, von denen jede wiederum viele hypothetische Erfassungen der die hypothetische Position umgebenden Merkmale 41 aufweist, wobei jede Erfassung eine Angabe nach Richtung und Entfernung aufweist..

Fig. 4b zeigt hierzu schematisch eine etwas konkretere Situation einer Umgebung 40. 50 symbolisiert das Fahrzeug, 41a bis 41c symbolisieren unterschiedliche Merkmale. Es kann davon ausgegangen werden, dass die Wand 41a Niederschlag in der Kartierung gefunden hat und mit entsprechenden Merkmalen jeweils hoher Vorhandenseinswahrscheinlichkeiten (z. B. 0,99 oder 1) an den entsprechenden Kacheln repräsentiert ist. Die mit 41b symbolisierte Kiste (beispielhaft für abgestelltes Lagergut, geparktes Fahrzeug, ...) ist gegebenenfalls auch kartiert, insbesondere mit einer geringeren Vorhandenseinswahrscheinlichkeit (z. B. 0,35). Die Person 41c wird konkret mit hoher Wahrscheinlichkeit nicht kartiert sein. Allerdings kann für die jeweilige Raumkachel aus früheren sporadischen Erfassungen heraus eine bestimmte Belegungswahrscheinlichkeit/Vorhandenseinswahrscheinlichkeit in die Karte Eingang gefunden haben. Diese kann dann gering sein, bspw. 0,07.

Mit den Kreuzen 45 sind die angesprochenen hypothetischen Positionen (Partikel) gezeigt. Das Fahrzeug 50 selbst befindet sich an einer vermuteten Position, wie in Fig. 4b eingezeichnet. Es sei darauf hingewiesen, dass diese vermutete Position anhand der Odometrie oder ähnlichem aus einer früher bestimmten Position fortgeschrieben worden sein kann. Es kann aber auch die frühere Position als eine (dann ungenauere) vermutete Position verwendet werden.

Mit 46 ist eine der vielen realen Erfassungen von Merkmalen aus der Perspektive des Fahrzeugs 50 bei einer Vermessung angedeutet. Mit 47 ist eine der vielen hypothetische Erfassungen von Merkmalen aus der Perspektive der einen zu Erläuterungszwecken herausgehobenen hypothetischen Position 45a angedeutet. Der Übersichtlichkeit halber sind diese Bezugszeichen nur für die Erfassung eines einzelnen Merkmals (einer Wandstelle) aus der Perspektive des Fahrzeugs und nur für eines der vielen Partikel 45 eingezeichnet. Die Erfassungen 46 aus der Perspektive des Fahrzeugs 50 geschehen real durch entsprechende Vorrichtungen 56 des Fahrzeugs 50, während die Erfassungen 47 hypothetisch/theoretisch sind und datenverarbeitend anhand der angenommenen Position und der Kartendaten geschieht.

Es wird dann für jede hypothetische Position 45 eine Wahrscheinlichkeit wh für deren Richtigkeit ermittelt. Diese Wahrscheinlichkeit hängt auch von den Zuverlässigkeitswerten und den Belegungswahrscheinlichkeitswerten der jeweils involvierten Merkmale ab. Die Wahrscheinlichkeit wh einer hypothetischen Position hängt von den Richtigkeits-Wahrscheinlichkeiten we der einzelnen Erfassungen der einzelnen Merkmale aus der jeweiligen hypothetischen Position heraus ab. Die Richtigkeits-Wahrscheinlichkeiten we der einzelnen Erfassungen 47 können dabei auch vom Unterschied des hypothetisch erfassten Abstands bei 47 zum real erfassten Abstand bei 46 abhängen. Die Abhängigkeit kann so sein, dass die Relevanz/Gewichtung umso geringer wird, je größer der Unterschied ist. Es kann hier eine Gaußverteilung um den real gemessenen Abstand herum angenommen werden mit einer geeignet gewählten Standardabweichung $\sigma$. Die Gewichtung we einer einzelnen Erfassung eines Merkmals i aus der Perspektive eines einzelnen Partikels i gesehen aus einer hypothetischen Position 45 heraus kann demnach mit folgender Formel bestimmt werden:

$$we(i,45a) = p1*e^{-exp}$$

mit

$$exp = p2*(dh(i,45a)-dr(i))^2/(2\sigma^2)$$

we(i, 45a) ist die Wahrscheinlichkeit der Richtigkeit einer Erfassung eines Merkmals i aus einer hypothetischen Position 45a heraus. dr(i) ist der real gemessene Abstand zum Merkmal i, dh(i,45a) ist der hypothetisch ermittelte Abstand zwischen Merkmal i und Partikel 45a, $\sigma$ ist die Standardabweichung.

Mit p1 und p2 sind Platzhalter angesprochen, an deren Stelle der jeweilige Zuverlässigkeitswert Zi des erfassten Merkmals i einfließen kann. Der Wert Zi kann bei p1 multiplikativ zur Gewichtung der Richtigkeitswahrscheinlichkeit einfließen, oder er kann bei p2 multiplikativ in den Exponenten einfließen. Bei p1 und p2 kann auch die Vorhandenseinswahrscheinlichkeit/Belegungswahrscheinlichkeit V des jeweils betrachteten Merkmals/der betrachteten Kachel einfließen.

Auf diese Weise werden für eine hypothetische Position 45a mehrere/viele Wahrscheinlichkeiten we(i, 45a) einzelner Erfassungen einzelner Merkmale/Kacheln aus der hypothetischen Perspektive der jeweils hypothetischen Position erhalten.

Um für eine hypothetische Position (beispielsweise 45a) einen Gesamtwert der Wahrscheinlichkeit ihrer Richtigkeit zu erhalten, können dann die einzelnen Wahrscheinlichkeiten we(i, 45a) verknüpft werden, beispielsweise multiplikativ. Hier wird wie schon gesagt davon ausgegangen, dass die Normierungen entsprechend der stochastischen Rechnung erfolgen, also die Werte von we(i, 45a) < 1 sind. Wenn die hypothetische Vermessung aus der hypothetischen Position 45a heraus beispielsweise 100 Merkmale erfasst (also $1 \leq i \leq 100$), werden 100 jeweils zugeordnete Werte von we(i, 45a) erhalten. Diese können über alle i hinweg multipliziert oder im Logarithmischen addiert werden. Es kann auch an dieser Stelle die Zuverlässigkeit mit eingearbeitet werden, wenn sie nicht schon vorher berücksichtigt worden ist, etwa indem sie bei dieser Gesamtproduktbildung (oder logarithmischen Summenbildung) mit hineingerechnet (multipliziert, addiert) wird. Auf diese Weise wird eine Wahrscheinlichkeit wh (45a) der Richtigkeit einer bestimmten hypothetischen Position 45a erhalten.

Das obige Vorgehen wird für alle betrachteten hypothetischen Positionen 45 (Partikel) durchgeführt. Deren Anzahl kann größer 10, 20, 50 oder 100 sein. Damit numerische Vergleichbarkeit vorliegt, müssen bei der Bildung der Gesamtwahrscheinlichkeit wh für die jeweiligen hypothetischen Positionen 45 (Partikel) die Anzahl der betrachteten Einzelerfassungen we(i, 45a) gleich sein.

Anhand der so gewonnenen Vielzahl von Werten von Gesamtwahrscheinlichkeiten wh der einzelnen hypothetischen Positionen 45 kann dann die tatsächliche Position des Fahrzeugs 50 ermittelt werden. Eine Herangehensweise hierfür ist es, die Position mit der besten/höchsten Wahrscheinlichkeit zu wählen. Eine andere Möglichkeit ist es, aus einer Anzahl von relativ guten Wahrscheinlichkeiten oder aus einer vorgegebenen Anzahl von Wahrscheinlichkeiten eine entsprechend den jeweiligen Wahrscheinlichkeiten wh gewichtete Mittelwertbildung der jeweiligen Positionen in x und in y (und gegebenenfalls in z) vorzunehmen und diese Mittelwerte als neue Position zu nehmen.

In die so ermittelte Position ist der Zuverlässigkeitswert und der Belegungswahrscheinlichkeitswert der Merkmale bei der Gewichtung einzelner Messergebnisse eingegangen. Zuverlässige Merkmale gingen stärker gewichtet ein als weniger zuverlässige, so dass das Gesamtergebnis mit höherer Wahrscheinlichkeit näher am richtigen Ergebnis liegt.

Der beschriebene Algorithmus ist auch als "Monte-Carlo-Lokalisierung" bekannt. Es ist aber auch möglich, andere Lokalisierungsverfahren um die Berücksichtigung von Zuverlässigkeitswerten der erfassten Merkmale zu erweitern. Beispielsweise kann ein Kalman-Filter um die Berücksichtigung von Zuverlässigkeitswerten erweitert werden.

Die ermittelten Zuverlässigkeitswerte können auch zur Wegplanung für ein bewegliches Objekt in einer Umgebung herangezogen werden. Es wird hierbei zunächst eine digitale Repräsentation der Umgebung bereitgestellt, die mehrere Umgebungsmerkmale repräsentiert und für wenigstens einige dieser Merkmale auch jeweils Zuverlässigkeitswerte angibt oder deren Herleitung erlaubt. Diese Zuverlässigkeitswerte können wie oben beschrieben gestaltet und ermittelt sein und liegen neben Belegungswahrscheinlichkeiten/ Vorhandenseinswahrscheinlichkeiten kachelweise/merkmalsweise räumlich aufgelöst vor. Es wird dann ein Wegpunkt als erster Punkt eines zu planendes Weges gesetzt. Am Anfang des Verfahrens kann der erste Punkt die momentane eigene Position sein. Im weiteren Verlauf kann der erste Punkt ein zuletzt gewählter Punkt des Weges sein. Es wird dann ein dem ersten Punkt folgender und von diesem räumlich beabstandeter zweiter Punkt mit einem Wegfindungsverfahren oder Routing-Algorithmus festgelegt, das bzw. der hier nicht konkreter Gegenstand des Interesses ist.

Als Nächstes kann der zweite Punkt unter Verwendung der digitalen Repräsentation einschließlich der angegebenen Zuverlässigkeitswerte auf Brauchbarkeit / Befahrbarkeit überprüft werden. Je nach Abstand des zweiten Punkts vom ersten Punkt können hierbei auch zwischen beiden liegende Punkte auf Befahrbarkeit überprüft werden, wie angegeben. Wenn die Überprüfung ein vorgegebenes Kriterium erfüllt, insbesondere Befahrbarkeit des zweiten Wegpunkts und gegebenenfalls dazwischenliegender Wegpunkte zeigt, wird der zweite Punkt als weiterer Wegpunkt des zu planenden Weges gespeichert und als neuer erster Punkt zum Fortsetzen des Verfahrens mit der Wahl eines diesem neuen ersten Punkt folgenden zweiten Punktes verwendet. Wenn das vorgegebene Kriterium nicht erfüllt ist, wird ein anderer, dem ersten Punkt folgender zweiter Punkt gewählt und dieser wiederum gegebenenfalls mit weiteren dazwischenliegenden Punkten auf Befahrbarkeit und Verwendung der digitalen Repräsentation einschließlich der angegebenen Zuverlässigkeitswerte überprüft.

Auf diese Weise arbeitet sich das Verfahren iterativ voran, bis ein Weg hin zum gewünschten Ziel gefunden ist. Auch hier werden zur Beurteilung der Brauchbarkeit der hypothetischen neuen Wegpunkte Zuverlässigkeitswerte und Belegungswahrscheinlichkeitswert eingebunden, um reale Gegebenheiten besser als im Stand der Technik in die Wegfindung einfließen lassen zu können.

Allgemein sollen in dieser Beschreibung Merkmale auch dann als miteinander kombinierbar angesehen werden, wenn diese Kombination nicht ausdrücklich angesprochen ist, soweit die Kombination technisch möglich ist. Merkmale, die in einem bestimmten Kontext oder Zusammenhang oder Patentanspruch beschrieben sind, sollen auch aus diesem Kontext, Zusammenhang oder Patentanspruch heraus lösbar verstanden werden und mit anderen Kontexten, Zusammenhängen und Patentansprüchen kombinierbar angesehen werden. Verfahrensmerkmale sollen auch als Offenbarung für solche Verfahrensmerkmale implementierende Vorrichtungen verstanden werden, und umgekehrt.

Eine für sich alleine nicht die geschützte Erfindung bildende Umgebungsrepräsentationsvorrichtung 50 hat einen Datenträger 51 und ein damit verbundenes Schnittstellengerät 52, wobei der Datenträger Daten trägt, die eine Umgebung repräsentieren, mit Kartendatenteilen 51a, die ortsauflösend Merkmale einer Umgebung angeben oder die Herleitung solcher Merkmalsangaben erlauben, und mit Zuverlässigkeitsdatenteilen 51b, die ortsauflösend Zuverlässigkeitsdaten von Merkmalen einer Umgebung angeben oder die Herleitung solcher Zuverlässigkeitsdaten erlauben und die ortsauflösenden angeben, als wie zuverlässig erfassbar die jeweils repräsentierten Merkmale eingeschätzt wurden, wobei das Schnittstellengerät Kartendaten und Zuverlässigkeitsdaten einander ortsauflösend zugeordnet zugänglich macht.

In der obigen Umgebungsrepräsentationsvorrichtung stellen die Kartendatenteile Vorhandenseinswahrscheinlichkeiten dar, die ortsauflösend Vorhandenseinswahrscheinlichkeiten von Merkmalen einer Umgebung angeben oder die Herleitung solcher Vorhandenseinswahrscheinlichkeiten erlauben und die ortsauflösenden angeben, als wie wahrscheinlich vorhanden ein repräsentiertes Merkmal eingeschätzt wurde.

Der Datenträger kann Historiedatenteile 51c tragen, die ortsauflösend Erfassungshistorien von Merkmalen einer Umgebung angeben oder die Herleitung solcher Erfassungshistorien erlauben, wobei das Schnittstellengerät auch die Historiedaten den anderen Daten ortsauflösend zugeordnet zugänglich macht.

Der Datenträger kann auch Markierungsdatenteile 51d tragen, die ortsauflösend markieren, welche der Zuverlässigkeitsdaten und/oder der Kartendaten im Laufe der Zeit änderbar sein sollen und welche nicht, und wobei das Schnittstellengerät auch die Markierungsdaten den anderen Daten ortsauflösend zugeordnet zugänglich macht.

Ein für sich alleine nicht die geschützte Erfindung bildendes Verfahren zur Bestimmung einer elektronisch nutzbaren Repräsentation einer Umgebung, in der Merkmalen vorhanden sind, hat Schritten Bereitstellen von Kartendaten 31, die ortsauflösend Merkmale der Umgebung angeben oder die Herleitung solcher Merkmalsangaben erlauben, Ermitteln von Zuverlässigkeitsdaten 32 einzelner Merkmalsangaben, die von den bereitgestellten Kartendaten erfasst sind, wobei die Zuverlässigkeitsdaten ortsauflösenden angeben, als wie zuverlässig erfassbar die jeweils angegebenen Merkmale angesehen werden können, und Speichern der Kartendaten und der Zuverlässigkeitsdaten in ortsauflösend einander zugeordneter oder zuordenbarer Weise als Umgebungsrepräsentation 10.

Bei dem Verfahren wie oben können die Zuverlässigkeitsdaten einzelner Merkmalsbereiche anhand von Streuungen von zeitnah zueinander ermittelten Messwerten gleicher Kartenbereiche bestimmt werden. Bei dem obigen Verfahren können die Zuverlässigkeitsdaten einzelner Merkmalsbereiche anhand des Alters von früher ermittelten Messwerten gleicher Kartenbereiche bestimmt werden.

Bei dem obigen können die Zuverlässigkeitsdaten einzelner Kartenbereiche auch manuell eingegeben und/oder verändert werden, vorzugsweise über eine graphische Benutzeroberfläche.

Bei dem obigen können die Zuverlässigkeitsdaten während der Nutzung einer Umgebungsrepräsentation nach Maßgabe aktueller Messwerte eines die Umgebungsrepräsentation nutzenden Geräts oder Fahrzeugs und nach Maßgabe von Historiedaten ermittelt und/oder verändert werden.

Bei dem obigen Verfahren können die Merkmalsdaten der Kartendaten ortsauflösend eine Vorhandenseinswahrscheinlichkeit eines Merkmals angeben. Bei dem obigen Verfahren können die ortsaufgelösten Vorhandenseinswahrscheinlichkeitswerte und die ortsaufgelösten Zuverlässigkeitswert getrennt gespeichert und/oder zu einem ortsaufgelösten gemeinsamen Parameter verrechnet werden.

Bei dem obigen Verfahren kann die Umgebungsrepräsentation eine zweidimensionale Fläche oder ein dreidimensionales Volumen beschreiben.

Bei dem obigen Für einzelne Kartenbereiche können deren Zuverlässigkeitsdaten als unveränderlich gekennzeichnet werden, vorzugsweise über eine graphische Benutzerschnittstelle, so dass sie nicht verändert werden.

Bei dem obigen Verfahren kann die repräsentierte Umgebung logisch in eine Vielzahl von Kacheln 21 unterteilt sein, wobei die Kartendaten und die Zuverlässigkeitsdaten kachelweise aufgelöst oder auflösbar oder interpolierbar sind, wobei einer Kachel ein Datentupel zugeordnet oder zuordenbar sein kann, das für diese Kachel mindestens eine Vorhandenseinswahrscheinlichkeit und einen Zuverlässigkeitswert aufweist und optional auch eine Unveränderlichkeitskennzeichnung wie vorher beschrieben.

Bei dem obigen Verfahren können in der repräsentierten Umgebung mehrere bekannte Reflektorpunkte angebracht sein, wobei die Kartendaten und die Zuverlässigkeitsdaten reflektorpunktweise aufgelöst oder auflösbar gespeichert werden können, wobei einem Reflektorpunkt optional auch eine Unveränderlichkeitskennzeichnung wie vorher beschrieben zugeordnet oder zuordenbar sein kann.

Bei dem obigen Verfahren können einer Kachel bzw. einem Reflektorpunkt historierelevante Daten zugeordnet oder zuordenbar sein, insbesondere einer oder mehrere der Werte Zahl der Erfassungen eines Merkmals an der Kachel, Zahl der Nichterfassung eines Merkmals an der Kachel, Zahl der Änderungen der Erfassung eines Merkmals, Datum der letzten Erfassung, und Datum der ersten Erfassung.

Bei dem obigen Verfahren können die aktuellen Messwerte durch Vermessen der Umgebung aus der Perspektive des beweglichen Objekts gewonnen werden, wobei die Vermessung das Erfassen mehrerer Merkmale der Umgebung aufweist und die Messwerte einer zeitlichen Analyse unterzogen werden.

Bei dem obigen Verfahren können die Zuverlässigkeitsdaten jeweils als Faktor zwischen 0 und 1 ermittelt werden und/oder als dazu logarithmischer Wert zwischen $-\infty$ und 0.

Angegeben wird auch eine Vorrichtung zur Durchführung des eben beschriebenen Verfahrens.

Die Vorrichtung kann ein verteiltes System mit miteinander mindestens zeitweise vorzugsweise drahtlos verbundenen Rechnern aufweisen, wobei mindestens einer der Rechner Teil eines autonom navigierenden Fahrzeugs ist, das Sensorik zur Umgebungserfassung aufweist.

Das verteilte System kann ein peer-to-peer-System oder ein server-client-system ist.

Bezugszeichenliste

| | |
|---|---|
| 10 | Umgebung |
| 10' | Kartierung |
| 11 | Wand |
| 11' | Wandkartierung |
| 12 | Rolltor |
| 12' | Rolltorkartierung |
| 13 | Glastür |
| 13' | Glastürkartierung |
| 14 | Regal |
| 14' | Regalkartierung |
| 15 | Boden |
| 16 | Decke |
| 17 | Person |
| 17' | Personenkartierung |
| 30 | Datentupel |

| | |
|---|---|
| 31 | Koordinatendaten |
| 32 | Vorhandenseinswahrscheinlichkeit |
| 33 | Zuverlässigkeit |
| 34 | Markierung (Fixierungsflag) |
| 35-37 | Historiedaten |
| 38 | Messhistorie |
| 40 | Umgebung |
| 41a-z | Merkmale |
| 42a-z | Erfassungen |
| 45, 45a | hypothetische Positionen (Partikel) |
| 46 | reale Erfassung |
| 47 | hypothetische Erfassung |
| 50 | Fahrzeug |
| 50' | weiteres Fahrzeug |
| 51 | Speicher |
| 51a-e | Datenteile |
| 52 | Schnittstelle |
| 53 | Steckverbindung |
| 54-55 | Schnittstellen |
| 56 | Vermessungsvorrichtung |
| 57 | Server |
| 58 | Antrieb |

**Patentansprüche**

1. Verfahren zur Positionsermittlung eines beweglichen Objekts (50) in einer Umgebung (10, 40), in der elektronisch erfassbare Merkmale (41) vorhanden sind, mit den Schritten

    a. Bereitstellen einer digitalen Repräsentation der Umgebung (10, 40), die elektronisch erfassbare Umgebungsmerkmale (41) mit je einem Belegungswahrscheinlichkeitswert repräsentiert oder die die Herleitung solcher jeweiligen Belegungswahrscheinlichkeitswerte erlaubt, wobei ein Belegungswahrscheinlichkeitswert angibt, als wie wahrscheinlich vorhanden ein von dem Belegungswahrscheinlichkeitswert repräsentiertes Merkmal eingeschätzt wurde, und wobei die digitale Repräsentation der Umgebung (10, 40) für wenigstens einige dieser Merkmale (41) auch jeweils einen Zuverlässigkeitswert angibt oder die Herleitung eines jeweiligen solchen Zuverlässigkeitswerts erlaubt, wobei ein Zuverlässigkeitswert eines Merkmals angibt, wie zuverlässig das Merkmal erfassbar ist,
    b. Vermessen der Umgebung aus der Perspektive des beweglichen Objekts (50), wobei die Vermessung das Erfassen mehrerer der elektronisch erfassbaren Merkmale (41) der Umgebung aufweist,
    c. Bewerten des Vermessungsergebnisses mit aus der Umgebungsrepräsentation abgerufenen oder hergeleiteten Zuverlässigkeitswerten und Belegungswahrscheinlichkeitswerten, und
    d. Ermittlung der Position anhand des Bewertungsergebnisses.

2. Verfahren nach Anspruch 1,
**dadurch gekennzeichnet, dass**
das Bewerten mit einem Partikelfilteralgorithmus erfolgt, der folgende Schritte aufweisen kann:

    a. Festlegen einer vermuteten Position des Objekts (50) und mehrerer hypothetischer Positionen (45),
    b. für jede der festgelegten hypothetischen Positionen (45) aus deren jeweiliger Perspektive digitales Ermitteln je einer hypothetischen Vermessungen, wobei die hypothetische Vermessung das hypothetische Erfassen (47) mehrerer der elektronisch erfassbaren Merkmale (41) der Umgebung aus der jeweiligen Perspektive aufweist, und
    c. Ermitteln einer Richtigkeitswahrscheinlichkeit we jeder hypothetischen Position nach Maßgabe des Unterschieds zwischen hypothetisch bestimmtem und real ermitteltem Abstand und nach Maßgabe der Zuverlässigkeitswerte und Belegungswahrscheinlichkeitswerte der hypothetisch erfassten Merkmale (41), wobei die Abstände die zwischen hypothetischer Position und einem erfasstem Merkmal (41) bzw. zwischen der vermuteten Position und einem entsprechenden erfassten Merkmal (41) sind.

**3.** Verfahren nach Anspruch 2,
**dadurch gekennzeichnet, dass**

dessen Schritt c. für jede hypothetische Position die folgenden Schritte aufweist:

a. Ermitteln der Richtigkeitswahrscheinlichkeit we jeder einzelnen hypothetischen Merkmalserfassung nach Maßgabe des genannten Unterschieds, und
b. Herleiten eines Gesamtwahrscheinlichkeitswertes wh der hypothetischen Position aus den einzelnen Richtigkeitswahrscheinlichkeiten we der hypothetischen Merkmalserfassungen,

wobei die Zuverlässigkeitswerte und die Belegungswahrscheinlichkeitswerte der erfassten Merkmale im Schritt a. und/oder im Schritt b. berücksichtigt werden.

**4.** Verfahren nach Anspruch 3,
**dadurch gekennzeichnet, dass**
das Ermitteln einer Richtigkeitswahrscheinlichkeit we jeder einzelnen hypothetischen Erfassung anhand einer Gaußverteilung erfolgt, bei der der genannte Unterschied die Abszisse darstellt und bei der der Zuverlässigkeitswert, der einem hypothetisch erfassten Merkmal zugeordnet ist, als Faktor zwischen 0 und 1 im Exponenten oder an der Gaußverteilung berücksichtigt werden kann.

**5.** Verfahren nach Anspruch 4,
**dadurch gekennzeichnet, dass**
das Herleiten des Gesamtwahrscheinlichkeitswertes wh durch Multiplizieren der einzelnen Bewertungsergebnisse der hypothetischen Erfassungen erfolgt oder durch Summieren entsprechender logarithmischer Werte, wobei die Zuverlässigkeitswerte, die den jeweils hypothetisch erfassten Merkmal zugeordnet sind, als Faktoren zwischen 0 und 1 oder entsprechende logarithmische Werte der Summe berücksichtigt werden.

**6.** Verfahren nach Anspruch 2 oder 3,
**dadurch gekennzeichnet, dass**
die Positionsermittlung das Wählen der Positionen einer der hypothetischen Positionen nach Maßgabe der ermittelten Wahrscheinlichkeit als Objektposition aufweist.

**7.** Verfahren nach Anspruch 2 oder 3,
**dadurch gekennzeichnet, dass**
die Positionsermittlung eine gewichtete Verrechnung der Positionen mehrerer der hypothetischen Positionen nach Maßgabe deren ermittelter Wahrscheinlichkeiten umfasst.

**8.** Verfahren nach Anspruch 1,
**dadurch gekennzeichnet, dass**
das Bewerten mit einem Monte-Carlo-Algorithmus erfolgt.

**9.** Verfahren nach einem der vorherigen Ansprüche, bei dem die Bewertung des Vermessungsergebnisses die Gewichtungen von Merkmalserfassungen nach Maßgabe der jeweiligen Belegungswahrscheinlichkeitswerte und der Zuverlässigkeitswerte der erfassten Merkmale in der digitalen Repräsentation der Umgebung (10, 40) umfasst.

**10.** Verfahren zur Wegplanung für ein beweglichen Objekts (50) in einer Umgebung (10, 40), mit den Schritten

a. Bereitstellen einer digitalen Repräsentation der Umgebung (10, 40), die Umgebungsmerkmale (41) mit je einem Belegungswahrscheinlichkeitswert repräsentiert oder die die Herleitung solcher jeweiligen Belegungswahrscheinlichkeitswerte erlaubt, wobei ein Belegungswahrscheinlichkeitswert angibt, als wie wahrscheinlich vorhanden ein von dem Belegungswahrscheinlichkeitswert repräsentiertes Merkmal eingeschätzt wurde, und wobei die digitale Repräsentation der Umgebung (10, 40) für wenigstens einige dieser Merkmale (41) auch jeweils einen Zuverlässigkeitswert angibt oder die Herleitung eines jeweiligen solchen Zuverlässigkeitswerts erlaubt, wobei ein Zuverlässigkeitswert eines Merkmals angibt, wie zuverlässig das Merkmal erfassbar ist,
b. Setzen eines Wegpunktes als ersten Punkt eines zu planenden Wegs,
c. Wählen eines dem ersten Punkt folgenden und von diesem räumlich beabstandeten zweiten Punkt anhand eines Wegfindungskriteriums,
d. Überprüfen des zweiten Punktes und gegebenenfalls weiterer Punkte auf Befahrbarkeit mit aus der digitalen Repräsentation abgerufenen oder hergeleiteten Zuverlässigkeitswerten und Belegungswahrscheinlichkeitswerten,

e. wenn die Überprüfung ein vorgegebenes Kriterium erfüllt, Setzen des zweiten Punktes als weiteren Wegpunkt und als neuen ersten Punkt und Fortsetzen des Verfahrens bei c, andernfalls Wählen eines anderen dem ersten Punkt folgenden und von diesem räumlich beabstandeten zweiten Punktes anhand eines Wegfindungskriteriums und Fortsetzen des Verfahrens bei d.

11. Verfahren nach einem der vorherigen Ansprüche, bei dem Belegungswahrscheinlichkeitswerte und Zuverlässigkeitswerte Zahlenwerte zwischen 0 und 1 haben.

12. Vorrichtung zur Durchführung des Verfahrens nach einem der vorherigen Ansprüche.

13. Vorrichtung nach Anspruch 12,
**dadurch gekennzeichnet, dass**
die Vorrichtung ein verteiltes System mit miteinander mindestens zeitweise vorzugsweise drahtlos verbundenen Rechnern aufweist, wobei mindestens einer der Rechner Teil eines autonom navigierenden Fahrzeugs (50) ist, das Sensorik zur Umgebungserfassung aufweist.

14. Vorrichtung nach Anspruch 12,
**dadurch gekennzeichnet, dass**
das verteilte System ein peer-to-peer-System oder ein server-client-system ist.

15. Datenträger mit Daten darauf, die computerausführbaren Code darstellen, der, wenn ausgeführt, ein Verfahren nach einem der Ansprüche 1 bis 11 implementiert.

**Claims**

1. A method of determining the position of a moving object (50) in an environment (10, 40) in which electronically detectable features (41) are present, comprising the steps

   a. providing a digital representation of the environment (10, 40) that represents electronically detectable environmental features (41) with one occupancy probability value each or that allows the derivation of such respective occupancy probability values, wherein an occupancy probability value indicates how likely to be present a feature represented by the occupancy probability value was estimated to be, and wherein the digital representation of the environment (10, 40) also indicates a respective reliability value for at least some of these features (41) or allows the derivation of a respective such reliability value, wherein a reliability value of a feature indicates how reliably the feature can be detected;
   b. measuring the environment from the perspective of the moving object (50), wherein the measurement comprises detecting a plurality of the electronically detectable features (41) of the environment;
   c. assessing the measurement result using reliability values and occupancy probability values retrieved or derived from the environmental representation; and
   d. determining the position based on the assessment result.

2. A method in accordance with claim 1,
   **characterized in that**
   the assessment takes place with a particle filter algorithm which can have the following steps:

   a. defining an assumed position of the object (50) and a plurality of hypothetical positions (45);
   b. for each of the defined hypothetical positions (45), from their respective perspectives, digitally determining one hypothetical measurement each, wherein the hypothetical measurement comprises hypothetically detecting (47) a plurality of the electronically detectable features (41) of the environment from the respective perspective; and
   c. determining a correctness probability we of each hypothetical position in accordance with the difference between the hypothetically determined distance and the actually determined distance and in accordance with the reliability values and occupancy probability values of the hypothetically detected features (41), wherein the distances are those between the hypothetical position and a detected feature (41) and between the assumed position and a corresponding detected feature (41), respectively.

**3.** A method in accordance with claim 2,
**characterized in that**

its step c. has the following steps for each hypothetical position:

a. determining the correctness probability we of each individual hypothetical feature detection in accordance with said difference; and
b. deriving an overall probability value wh of the hypothetical position from the individual correctness probabilities we of the hypothetical feature detections,

wherein the reliability values and the occupancy probability values of the detected features are taken into account in step a. and/or in step b.

**4.** A method in accordance with claim 3,
**characterized in that**
the determination of a correctness probability we of each individual hypothetical detection takes place by means of a Gaussian distribution in which said difference represents the abscissa and in which the reliability value that is associated with a hypothetically detected feature can be taken into account as a factor between 0 and 1 in the exponent or in the Gaussian distribution.

**5.** A method in accordance with claim 4,
**characterized in that**
the derivation of the overall probability value wh takes place by multiplying the individual assessment results of the hypothetical detections or by summing corresponding logarithmic values, with the reliability values that are associated with the respective hypothetically detected feature being taken into account as factors between 0 and 1 or as corresponding logarithmic values of the sum.

**6.** A method in accordance with claim 2 or claim 3,
**characterized in that**
the position determination comprises selecting the positions of one of the hypothetical positions in accordance with the determined probability as the object position.

**7.** A method in accordance with claim 2 or claim 3,
**characterized in that**
the position determination comprises a weighted offsetting of the positions of a plurality of the hypothetical positions in accordance with their determined probabilities.

**8.** A method in accordance with claim 1,
**characterized in that**
the assessment takes place with a Monte Carlo algorithm.

**9.** A method in accordance with any one of the preceding claims, in which the assessment of the measurement result comprises the weighting of feature detections in accordance with the respective occupancy probability values and the reliability values of the detected features in the digital representation of the environment (10, 40).

**10.** A method of path planning for a moving object (50) in an environment (10, 40), comprising the steps

a. providing a digital representation of the environment (10, 40) that represents environmental features (41) with one occupancy probability value each or that allows the derivation of such respective occupancy probability values, wherein an occupancy probability value indicates how likely to be present a feature represented by the occupancy probability value was estimated to be, and wherein the digital representation of the environment (10, 40) also indicates a respective reliability value for at least some of these features (41) or allows the derivation of a respective such reliability value, wherein a reliability value of a feature indicates how reliably the feature can be detected;
b. setting a waypoint as the first point of a path to be planned;
c. selecting a second point, which follows the first point and is spatially spaced apart therefrom, based on a pathfinding criterion;
d. checking the second point and, if necessary, further points for trafficability using reliability values and occupancy probability values retrieved or derived from the digital representation;

e. if the check satisfies a predefined criterion, setting the second point as a further waypoint and as a new first point and continuing the method at c, otherwise selecting another second point, which follows the first point and is spatially spaced apart therefrom, based on a pathfinding criterion and continuing the method at d.

11. A method in accordance with any one of the preceding claims, in which occupancy probability values and reliability values have numerical values between 0 and 1.

12. An apparatus for carrying out the method in accordance with any one of the preceding claims.

13. An apparatus in accordance with claim 12,
**characterized in that**
the apparatus has a distributed system comprising computers which are at least temporarily connected, preferably wirelessly connected, to one another, with at least one of the computers being part of an automated guided vehicle (50) which has a sensor system for environment detection.

14. An apparatus in accordance with claim 12,
**characterized in that**
the distributed system is a peer-to-peer system or a server-client system.

15. A data carrier having data on it that represent a code which is executable by a computer and which, when executed, implements a method in accordance with any one of the claims 1 to 11.

**Revendications**

1. Procédé de détermination de la position d'un objet mobile (50) dans un environnement (10, 40) dans lequel existent des caractéristiques (41) susceptibles d'être détectées électroniquement, comprenant les étapes consistant à

a. fournir une représentation numérique de l'environnement (10, 40), qui représente des caractéristiques d'environnement (41), susceptibles d'être détectées électroniquement, avec une valeur de probabilité d'occupation respective, ou qui permet de déduire de telles valeurs de probabilité d'occupation, une valeur de probabilité d'occupation indiquant la probabilité d'existence d'une caractéristique représentée par la valeur de probabilité d'occupation, et la représentation numérique de l'environnement (10, 40) inique également, pour au moins certaines de ces caractéristiques (41), une valeur de fiabilité respective ou permet de déduire une telle valeur de fiabilité respective, une valeur de fiabilité d'une caractéristique indiquant la fiabilité de détection de ladite caractéristique,

b. mesurer l'environnement à partir de la perspective de l'objet mobile (50), le mesurage comprenant la détection de plusieurs des caractéristiques (41) de l'environnement susceptibles d'être détectées électroniquement,

c. évaluer le résultat du mesurage avec des valeurs de fiabilité et des valeurs de probabilité d'occupation appelées ou déduites de la représentation de l'environnement, et

d. déterminer la position à l'aide du résultat de l'évaluation.

2. Procédé selon la revendication 1,
**caractérisé en ce que**
l'évaluation s'effectue à l'aide d'un algorithme de filtre à particules, qui peut comprendre les étapes suivantes consistant à :

a. définir une position supposée de l'objet (50) et plusieurs positions hypothétiques (45),

b. pour chacune des positions hypothétiques définies (45), à partir de leur perspective respective, déterminer numériquement un mesurage hypothétique respectif, le mesurage hypothétique comprenant la détection hypothétique (47) de plusieurs des caractéristiques (41) de l'environnement susceptibles d'être détectées électroniquement à partir de la perspective respective, et

c. déterminer une probabilité d'exactitude we de chaque position hypothétique en fonction de la différence entre la distance définie de manière hypothétique et la distance déterminée de manière réelle et en fonction des valeurs de fiabilité et des valeurs de probabilité d'occupation des caractéristiques (41) détectées de manière hypothétique, les distances étant celles entre la position hypothétique et une caractéristique détectée (41) ou entre la position supposée et une caractéristique détectée correspondante (41).

**3.** Procédé selon la revendication 2,
**caractérisé en ce que**

son étape c. comprend, pour chaque position hypothétique, les étapes suivantes consistant à :

a. déterminer la probabilité d'exactitude we de chaque détection de caractéristique hypothétique en fonction de ladite différence, et
b. déduire une valeur de probabilité totale wh de la position hypothétique à partir des probabilités d'exactitude individuelles we des détections de caractéristique hypothétiques,

les valeurs de fiabilité et les valeurs de probabilité d'occupation des caractéristiques détectées étant prises en compte à l'étape a. et/ou à l'étape b.

**4.** Procédé selon la revendication 3,
**caractérisé en ce que**
la détermination d'une probabilité d'exactitude we de chaque détection hypothétique individuelle est effectuée à l'aide d'une distribution gaussienne dans laquelle ladite différence représente l'abscisse et la valeur de fiabilité, associée à une caractéristique détectée de manière hypothétique, peut être prise en compte comme facteur compris entre 0 et 1 dans l'exposant ou dans la distribution gaussienne.

**5.** Procédé selon la revendication 4,
**caractérisé en ce que**
la déduction de la valeur de probabilité totale wh s'effectue en multipliant les résultats d'évaluation individuels des détections hypothétiques ou en additionnant les valeurs logarithmiques correspondantes, les valeurs de fiabilité associées à chaque caractéristique détectée de manière hypothétique étant prises en compte comme facteurs entre 0 et 1 ou comme valeurs logarithmiques correspondantes de la somme.

**6.** Procédé selon la revendication 2 ou 3,
**caractérisé en ce que**
la détermination de la position comprend la sélection des positions de l'une des positions hypothétiques comme position de l'objet, en fonction de la probabilité déterminée.

**7.** Procédé selon la revendication 2 ou 3,
**caractérisé en ce que**
la détermination de la position comprend une prise en compte pondérée des positions de plusieurs des positions hypothétiques, en fonction de leurs probabilités déterminées.

**8.** Procédé selon la revendication 1,
**caractérisé en ce que**
l'évaluation est effectuée à l'aide d'un algorithme de Monte Carlo.

**9.** Procédé selon l'une des revendications précédentes,
dans lequel l'évaluation du résultat du mesurage comprend les pondérations des détections de caractéristique, en fonction des valeurs de probabilité d'occupation respectives et des valeurs de fiabilité des caractéristiques détectées dans la représentation numérique de l'environnement (10, 40).

**10.** Procédé de planification d'un itinéraire pour un objet mobile (50) dans un environnement (10, 40), comprenant les étapes consistant à

a. fournir une représentation numérique de l'environnement (10, 40) qui représente des caractéristiques d'environnement (41) avec une valeur de probabilité d'occupation respective ou qui permet de déduire de telles valeurs de probabilité d'occupation respectives, une valeur de probabilité d'occupation indiquant la probabilité d'existence estimée d'une caractéristique représentée par la valeur de probabilité d'occupation, et la représentation numérique de l'environnement (10, 40) indique également, pour au moins certaines de ces caractéristiques (41), une valeur de fiabilité respective ou permet de déduire une telle valeur de fiabilité respective, une valeur de fiabilité d'une caractéristique indiquant la fiabilité de détection de ladite caractéristique,
b. définir un point d'itinéraire comme premier point d'un itinéraire à planifier,
c. sélectionner un deuxième point qui suit le premier point et qui est espacé spatialement de celui-ci, à l'aide d'un critère de recherche d'itinéraire,

d. vérifier la praticabilité du deuxième point et, le cas échéant, d'autres points, avec des valeurs de fiabilité et des valeurs de probabilité d'occupation appelées ou déduites de la représentation numérique,

e. si la vérification satisfait à un critère prédéfini, définir le deuxième point comme autre point d'itinéraire et comme nouveau premier point, et poursuivre le procédé en c, sinon sélectionner un autre deuxième point qui suit le premier point et qui est espacé spatialement de celui-ci, à l'aide d'un critère de recherche d'itinéraire, et poursuivre le procédé en d.

**11.** Procédé selon l'une des revendications précédentes,
dans lequel les valeurs de probabilité d'occupation et les valeurs de fiabilité ont des valeurs chiffrées comprises entre 0 et 1.

**12.** Dispositif pour la mise en oeuvre du procédé selon l'une des revendications précédentes.

**13.** Dispositif selon la revendication 12,
**caractérisé en ce que**
le dispositif comporte un système réparti avec des ordinateurs reliés entre eux au moins temporairement, de préférence sans fil, l'un au moins des ordinateurs faisant partie d'un véhicule (50) à navigation autonome, qui comporte des capteurs pour la détection de l'environnement.

**14.** Dispositif selon la revendication 12,
**caractérisé en ce que**
le système réparti est un système pair-à-pair ou un système serveur-client.

**15.** Support de données sur lequel sont inscrites des données représentant un code exécutable par ordinateur qui, lorsqu'il est exécuté, met en oeuvre un procédé selon l'une des revendications 1 à 11.

## Fig.1

# Fig.2

## Fig.3

30

| | |
|---|---|
| x, y | — 31 |
| Vo Wa | — 32 |
| ZuV | — 33 |
| Fix Flag | — 34 |
| $H_1$ | — 35 |
| $H_2$ | — 36 |
| $H_3$ | — 37 |
| MH | — 38 |

Fig.4a

## Fig.4b

Fig.5

EP 3 534 297 B1

# EP 3 534 297 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7689321 B2
- US 20080027591 A1
- WO 2018027210 A1
- WO 2017076929 A1
- US 20080033645 A1

**In der Beschreibung aufgeführte Nicht-Patentliteratur**

- **BRESSON.** Simultaneous Localization and Mapping: ... *IEEE Transactions on Intelligent Vehicles,* September 2017, vol. 2 (3), 194
- A Quantitative Study of Mapping and Localization .. *Nirma University International Conference on Engineering,* 2017, 1-5
- **CAIN ; LEONESSA.** FastSLAM Using Compressed Occupancy Grids. *Journal of Sensors,* 2016
- **SARANYA.** Occupancy Grid Based Path Planning ... *IJCTA,* vol. 2015, 1053-1061
- VisAGGE: Visible Angle Grid for Glas Environments. **FOSTER.** International Conference on Robotics and Automation. IEEE, 2013, 2213